# EUROPEAN PATENT APPLICATION

(11) **EP 4 703 878 A1**
(43) Date of publication of application: **04.03.2026**
(21) Application number: 23947391.1
(22) Date of filing: 05.12.2023
(51) Int. Cl.: G06F 9/50

(54) **HETEROGENEOUS MULTI-CORE DEVICE AND SCHEDULING METHOD**

(30) Priority: 28.07.2023 CN 202310945360
(71) Applicant: Huawei Technologies Co., Ltd., Shenzhen, Guangdong 518129 (CN)
(72) Inventor: WANG, Kebing, Shenzhen, Guangdong 518129 (CN); DING, Qing, Shenzhen, Guangdong 518129 (CN); PAN, Shilin, Shenzhen, Guangdong 518129 (CN); AI, Zaoping, Shenzhen, Guangdong 518129 (CN); YU, Wei, Shenzhen, Guangdong 518129 (CN); LI, Xin, Shenzhen, Guangdong 518129 (CN)
(74) Representative: Isarpatent
(86) International application number: PCT/CN2023/136573
(87) International publication number: WO 2025/025453

(57) **Abstract**

This application provides a heterogeneous multi-core apparatus and a scheduling method. The heterogeneous multi-core apparatus includes a plurality of cores. The plurality of cores include at least one high-performance core and at least one energy-efficient core. Maximum power consumption of any one of the at least one high-performance core is greater than maximum power consumption of any one of the at least one energy-efficient core. A maximum computing capacity of any one of the at least one high-performance core is greater than a maximum computing capacity of any one of the at least one energy-efficient core. A first core of the plurality of cores may allocate a first computing resource to a first thread, and allocate a second computing resource to a second thread. The first computing resource and the second computing resource belong to a second core of the plurality of cores. The second core is the first core or another core different from the first core. The second core may execute the first thread and the second thread in parallel. Among the cores in the heterogeneous multi-core apparatus, any type of core may be used to execute a plurality of threads in parallel. This can effectively improve utilization of computing resources in the heterogeneous multi-core apparatus.

## Description

### CROSS-REFERENCE TO RELATED APPLICATIONS

This application claims priority to Chinese Patent Application No. 202310945360.8, filed with the China National Intellectual Property Administration on July 28, 2023 and entitled "HETEROGENEOUS MULTI-CORE APPARATUS AND SCHEDULING METHOD", which is incorporated herein by reference in its entirety.

### TECHNICAL FIELD

This application relates to the field of chip technologies, and in particular, to a heterogeneous multi-core apparatus and a scheduling method.

### BACKGROUND

With development of electronic technologies and increasing user requirements, an electronic device can implement an increasing quantity of functions. When implementing different functions, the electronic device has different requirements for computing power of a processor. To meet diverse function requirements of the electronic device, a plurality of types of processor cores (cores for short) are disposed in the electronic device, that is, a heterogeneous multi-core architecture is used. In the heterogeneous multi-core architecture, a plurality of cores with different processing capacities may be disposed. For example, an energy-efficient core (to be specific, a core with low power consumption) and a high-performance core (to be specific, a core with high performance) are disposed. When a thread corresponding to a to-be-implemented function of the electronic device needs low computing power, the electronic device executes the thread by using the energy-efficient core, to reduce system energy consumption. When a thread corresponding to a to-be-implemented function of the electronic device needs high computing power, the electronic device executes the thread by using the high-performance core, to better meet a performance requirement of the thread.

However, types of processor cores in the electronic device are limited, and can hardly meet diverse computing power requirements of various threads. Consequently, performance or power consumption of the processor cores in the electronic device is still wasted.

### SUMMARY

Embodiments of this application provide a heterogeneous multi-core apparatus and a scheduling method, to improve utilization of computing resources of a heterogeneous multi-core apparatus.

According to a first aspect, an embodiment of this application provides a heterogeneous multi-core apparatus. The heterogeneous multi-core apparatus includes a plurality of cores. The plurality of cores include at least one high-performance core and at least one energy-efficient core. Maximum power consumption of any one of the at least one high-performance core is greater than maximum power consumption of any one of the at least one energy-efficient core. A maximum computing capacity of any one of the at least one high-performance core is greater than a maximum computing capacity of any one of the at least one energy-efficient core. A first core of the plurality of cores is configured to allocate a first computing resource to a first thread, and allocate a second computing resource to a second thread. The first computing resource and the second computing resource belong to a second core of the plurality of cores. The second core is the first core or another core different from the first core. The second core is configured to execute the first thread and the second thread in parallel. The first computing resource is used to execute the first thread, and the second computing resource is used to execute the second thread.

The heterogeneous multi-core apparatus may be a chip or a chip module.

In this embodiment of this application, among the cores in the heterogeneous multi-core apparatus, any type of core may be used to execute a plurality of threads in parallel. This can effectively improve utilization of computing resources in the heterogeneous multi-core apparatus, to effectively improve peak computing power of the heterogeneous multi-core apparatus.

In a possible design, the plurality of cores further include at least one medium-performance core. Maximum power consumption of any one of the at least one high-performance core is greater than maximum power consumption of any one of the at least one medium-performance core. A maximum computing capacity of any one of the at least one high-performance core is greater than a maximum computing capacity of any one of the at least one medium-performance core. Maximum power consumption of any one of the at least one medium-performance core is greater than maximum power consumption of any one of the at least one energy-efficient core. A maximum computing capacity of any one of the at least one medium-performance core is greater than a maximum computing capacity of any one of the at least one energy-efficient core. In this design, the medium-performance core is disposed in the heterogeneous multi-core apparatus, so that resources are allocated to threads more flexibly, to adapt to diverse performance requirements of different threads.

In a possible design, the first core is specifically configured to: allocate the first computing resource in the second core to the first thread according to a performance requirement of the first thread; and allocate the second computing resource in the second core to the second thread according to a performance requirement of the second thread. In this design, a computing resource is flexibly allocated to each thread according to a performance requirement of each thread, instead of configuring a fixed resource for each thread, to adapt to diverse requirements of different threads. Specifically, the first core may determine the second core from the plurality of cores, for example, select the second core according to the performance requirement of the first thread and the performance requirement of the second thread, where performance of the second core can match the performance requirement of the first thread and the performance requirement of the second thread. For another example, the first computing resource and the second computing resource in the second core are further allocated to the first thread and the second thread respectively according to the performance requirement of the first thread and the performance requirement of the second thread, to meet specific performance requirements of the two threads.

Optionally, the performance requirement of the first thread is represented by at least one of delay sensitivity, a service scenario, or user experience of the first thread, and the performance requirement of the second thread is represented by at least one of delay sensitivity, a service scenario, or user experience of the second thread.

In a possible design, the first computing resource includes a first dedicated computing resource, the second computing resource includes a second dedicated computing resource different from the first dedicated computing resource, and a percentage of the first dedicated computing resource in a hardware resource of the second core is different from a percentage of the second dedicated computing resource in the hardware resource of the second core. In this design, different dedicated computing resources are allocated to the first thread and the second thread, so that the first thread and the second thread do not interfere with each other when being executed.

In a possible design, the first computing resource and the second computing resource include a shared computing resource, and the second core is further configured to execute the first thread and the second thread in parallel by using the shared computing resource through time division multiplexing, where a priority of the first thread is higher than a priority of the second thread, and in the time division multiplexing, time at which the first thread uses the shared computing resource is prior to time at which the second thread uses the shared computing resource. In this design, based on the priority of the first thread and the priority of the second thread, a computing resource shared by the first thread and the second thread may be used through time division multiplexing, to effectively improve utilization of computing resources in the heterogeneous multi-core apparatus.

In a possible design, the shared computing resource includes at least one of the following: an instruction translation lookaside buffer ITLB, an instruction cache ICache, a branch target buffer BTB, a register rename table RRT, a physical register file RPF, a data translation lookaside buffer DTLB, or a cache DCache. In this design, the first thread and the second thread may share one or more hardware resources, to effectively improve resource utilization of the heterogeneous multi-core apparatus.

In a possible design, the second core supports a simultaneous multithreading SMT mode and a single-threaded ST mode, and the second core may further control, based on a quantity of threads currently running in an operating system, the second core to switch between the SMT mode and the ST mode. In this design, the second core may be controlled, based on the quantity of threads currently running in the operating system on the heterogeneous multi-core apparatus, to switch between the SMT mode and the ST mode, to effectively reduce unnecessary power consumption of the second core.

In a possible design, the second core is further configured to: when the first thread causes blocking at a pipeline frontend of the second core and a third thread causes blocking at a pipeline backend of a third core of the plurality of cores, schedule the third thread to the second core for execution, or schedule the first thread to the third core for execution. The third core is a core in the heterogeneous multi-core apparatus that is different from the second core. In this design, based on thread execution statuses of the second core and the third core, a plurality of to-be-executed threads are scheduled to appropriate cores for execution, so that computing resources of the cores can be better utilized.

In a possible design, the first thread and the second thread have a same security level. In this design, a same security level is set for the first thread and the second thread, so that the first thread and the second thread can be run in environments with a same security level, to avoid a security risk in a case in which the first thread and the second thread are executed in environments with different security levels.

In a possible design, the security level is a trusted execution environment TEE mode. In this design, the security level of the first thread and the second thread is set to the TEE mode, to avoid a security risk in a case in which the first thread is executed in an REE and the second thread is executed in an REE when the second core executes the first thread and the second thread in parallel.

According to a second aspect, an embodiment of this application further provides a scheduling method. The method includes: allocating a first computing resource to a first thread, and allocating a second computing resource to a second thread, where the first computing resource and the second computing resource belong to a first core or a second core of a plurality of cores included in a heterogeneous multi-core apparatus, the plurality of cores include at least one high-performance core and at least one energy-efficient core, maximum power consumption of any one of the at least one high-performance core is greater than maximum power consumption of any one of the at least one energy-efficient core, and a maximum computing capacity of any one of the at least one high-performance core is greater than a maximum computing capacity of any one of the at least one energy-efficient core; and executing the first thread and the second thread in parallel, where the first computing resource is used to execute the first thread, and the second computing resource is used to execute the second thread.

In a possible design, the plurality of cores further include at least one medium-performance core. Maximum power consumption of any one of the at least one high-performance core is greater than maximum power consumption of any one of the at least one medium-performance core. A maximum computing capacity of any one of the at least one high-performance core is greater than a maximum computing capacity of any one of the at least one medium-performance core. Maximum power consumption of any one of the at least one medium-performance core is greater than maximum power consumption of any one of the at least one energy-efficient core. A maximum computing capacity of any one of the at least one medium-performance core is greater than a maximum computing capacity of any one of the at least one energy-efficient core.

In a possible design, allocating the first computing resource to the first thread includes: allocating the first computing resource in the second core to the first thread according to a performance requirement of the first thread; and allocating the second computing resource to the second thread includes: allocating the second computing resource in the second core to the second thread according to a performance requirement of the second thread. Specifically, the second core is selected according to the performance requirement of the first thread and the performance requirement of the second thread, and performance of the second core can match the performance requirement of the first thread and the performance requirement of the second thread. For another example, the first computing resource and the second computing resource in the second core are further allocated to the first thread and the second thread respectively according to the performance requirement of the first thread and the performance requirement of the second thread, to meet specific performance requirements of the two threads.

In a possible design, the first computing resource includes a first dedicated computing resource, the second computing resource includes a second dedicated computing resource different from the first dedicated computing resource, and a percentage of the first dedicated computing resource in a hardware resource of the first core or the second core is different from a percentage of the second dedicated computing resource in the hardware resource of the first core or the second core.

In a possible design, the first computing resource and the second computing resource include a shared computing resource, and the method further includes: executing the first thread and the second thread in parallel by using the shared computing resource through time division multiplexing, where a priority of the first thread is higher than a priority of the second thread, and in the time division multiplexing, time at which the first thread uses the shared computing resource is prior to time at which the second thread uses the shared computing resource.

In a possible design, the shared computing resource includes at least one of the following: an instruction translation lookaside buffer ITLB, an instruction cache ICache, a branch target buffer BTB, a register rename table RRT, a physical register file RPF, a data translation lookaside buffer DTLB, or a cache DCache.

In a possible design, the second core supports a simultaneous multithreading SMT mode and a single-threaded ST mode, and the method further includes: controlling, based on a quantity of threads currently running in an operating system, the second core to switch between the SMT mode and the ST mode.

In a possible design, the method further includes: when the first thread causes blocking at a pipeline frontend of the second core and a third thread causes blocking at a pipeline backend of a third core of the plurality of cores, scheduling the third thread to the second core for execution, or scheduling the first thread to the third core for execution, where the third core is different from the second core.

In a possible design, the first thread and the second thread have a same security level.

In a possible design, the security level is a trusted execution environment TEE mode.

According to a third aspect, an embodiment of this application further provides a scheduling apparatus. The apparatus includes a scheduling unit and an execution unit. The scheduling unit is configured to allocate a first computing resource to a first thread, and allocate a second computing resource to a second thread, where the first computing resource and the second computing resource belong to a first core or a second core of a plurality of cores included in a heterogeneous multi-core apparatus, the plurality of cores include at least one high-performance core and at least one energy-efficient core, maximum power consumption of any one of the at least one high-performance core is greater than maximum power consumption of any one of the at least one energy-efficient core, and a maximum computing capacity of any one of the at least one high-performance core is greater than a maximum computing capacity of any one of the at least one energy-efficient core. The execution unit is configured to execute the first thread and the second thread in parallel, where the first computing resource is used to execute the first thread, and the second computing resource is used to execute the second thread.

In a possible design, the plurality of cores further include at least one medium-performance core. Maximum power consumption of any one of the at least one high-performance core is greater than maximum power consumption of any one of the at least one medium-performance core. A maximum computing capacity of any one of the at least one high-performance core is greater than a maximum computing capacity of any one of the at least one medium-performance core. Maximum power consumption of any one of the at least one medium-performance core is greater than maximum power consumption of any one of the at least one energy-efficient core. A maximum computing capacity of any one of the at least one medium-performance core is greater than a maximum computing capacity of any one of the at least one energy-efficient core.

In a possible design, the scheduling unit is specifically configured to: allocate the first computing resource in the second core to the first thread according to a performance requirement of the first thread; and allocate the second computing resource in the second core to the second thread according to a performance requirement of the second thread. Specifically, the second core is selected according to the performance requirement of the first thread and the performance requirement of the second thread, and performance of the second core can match the performance requirement of the first thread and the performance requirement of the second thread. For another example, the first computing resource and the second computing resource in the second core are further allocated to the first thread and the second thread respectively according to the performance requirement of the first thread and the performance requirement of the second thread, to meet specific performance requirements of the two threads.

In a possible design, the first computing resource includes a first dedicated computing resource, the second computing resource includes a second dedicated computing resource different from the first dedicated computing resource, and a percentage of the first dedicated computing resource in a hardware resource of the first core or the second core is different from a percentage of the second dedicated computing resource in the hardware resource of the first core or the second core.

In a possible design, the first computing resource and the second computing resource include a shared computing resource, and the execution unit is further configured to execute the first thread and the second thread in parallel by using the shared computing resource through time division multiplexing, where a priority of the first thread is higher than a priority of the second thread, and in the time division multiplexing, time at which the first thread uses the shared computing resource is prior to time at which the second thread uses the shared computing resource.

In a possible design, the shared computing resource includes at least one of the following: an instruction translation lookaside buffer ITLB, an instruction cache ICache, a branch target buffer BTB, a register rename table RRT, a physical register file RPF, a data translation lookaside buffer DTLB, or a cache DCache.

In a possible design, the scheduling unit is further configured to: when the first thread causes blocking at a pipeline frontend of the second core and a third thread causes blocking at a pipeline backend of a third core of the plurality of cores, schedule the third thread to the second core for execution, or schedule the first thread to the third core for execution, where the third core is different from the second core.

In a possible design, the first thread and the second thread have a same security level.

In a possible design, the security level is a trusted execution environment TEE mode.

According to a fourth aspect, an embodiment of this application further provides a computing device. The computing device includes the heterogeneous multi-core apparatus according to any one of the first aspect or the optional designs of the first aspect, or includes the scheduling apparatus according to any one of the third aspect or the optional designs of the third aspect.

According to a fifth aspect, an embodiment of this application further provides a computer-readable storage medium. The computer-readable storage medium includes instructions. When the instructions are run on a computer, the computer is enabled to perform the operation steps of the method according to any one of the second aspect or the optional designs of the second aspect.

For beneficial effects of each possible design of the second aspect to the fifth aspect of this application, refer to the first aspect. Details are not described herein again.

### BRIEF DESCRIPTION OF DRAWINGS

FIG. 1 is a diagram of a system architecture to which an embodiment of this application is applicable;
FIG. 2 is a diagram of a structure of a computing device according to an embodiment of this application;
FIG. 3 is a diagram of a structure of a processor according to an embodiment of this application;
FIG. 4A is a first diagram of a structure of a heterogeneous multi-core apparatus according to an embodiment of this application;
FIG. 4B(a), FIG. 4B(b), and FIG. 4B(c) are a second diagram of a structure of a heterogeneous multi-core apparatus according to an embodiment of this application;
FIG. 4C is a diagram of a structure of a scheduling apparatus according to an embodiment of this application;
FIG. 5 is a schematic flowchart of a scheduling method according to an embodiment of this application;
FIG. 6 is a diagram of configurations of computing resources according to an embodiment of this application;
FIG. 7 is a diagram of a pipeline micro-architecture of a processor core according to an embodiment of this application;

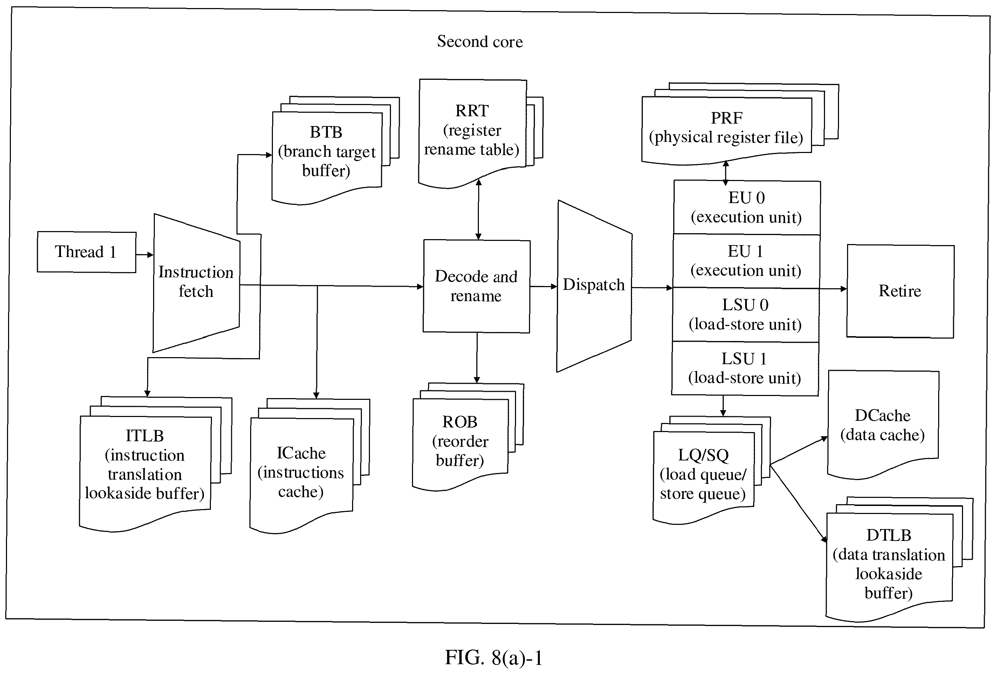

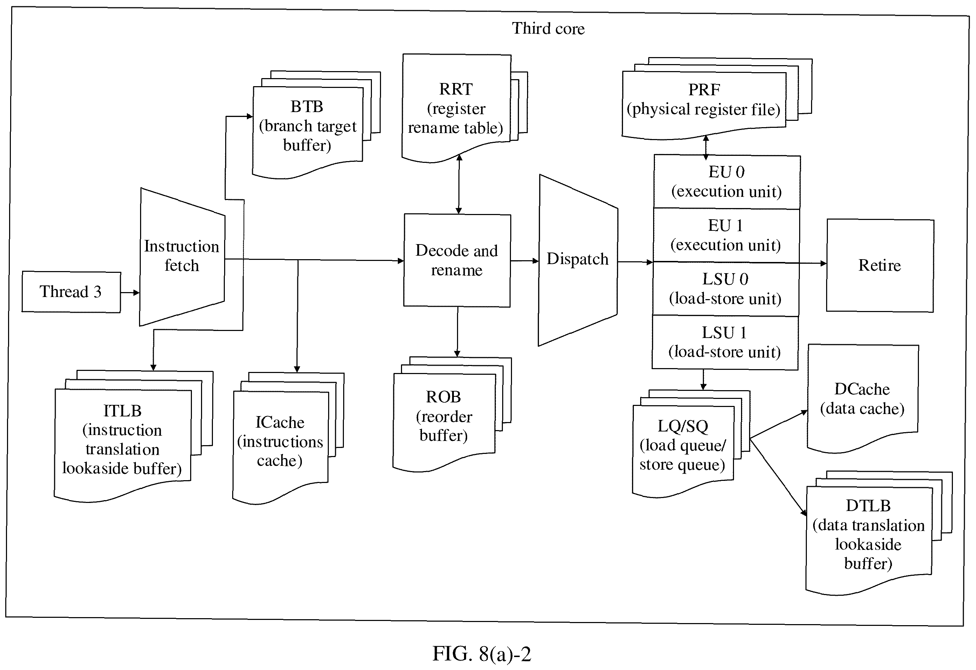

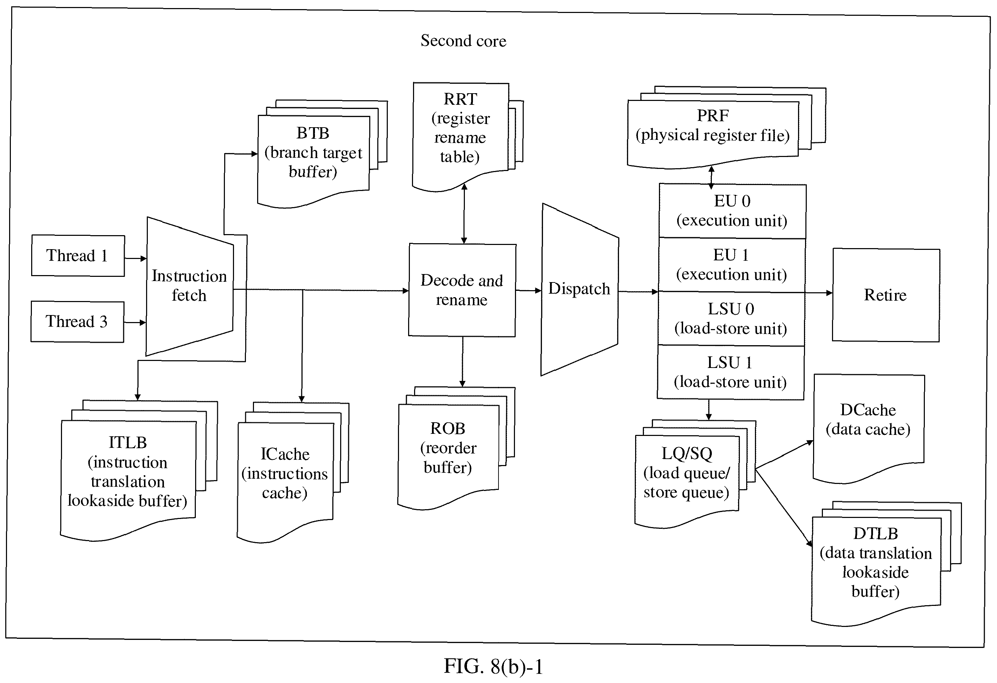

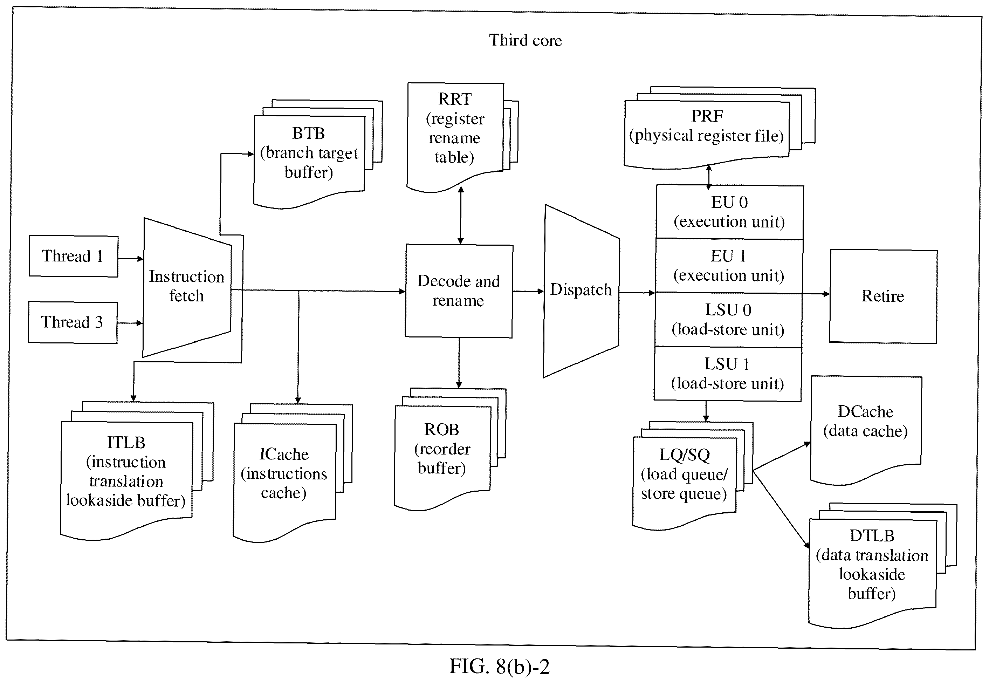

FIG. 8(a)-1, FIG. 8(a)-2, FIG. 8(b)-1, and FIG. 8(b)-2 are a diagram of thread scheduling of a multi-core processor according to an embodiment of this application;

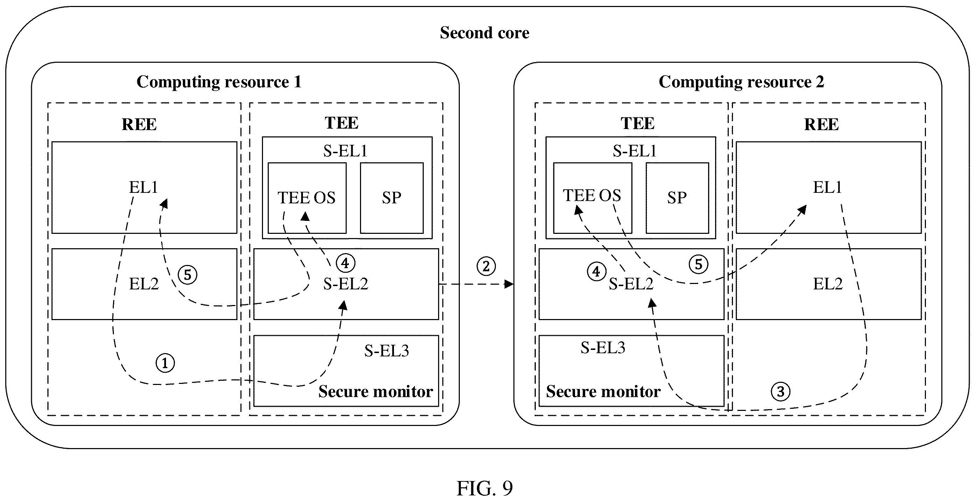

FIG. 9 is a diagram of a scenario in which both of two computing resources in a processor core are run in a TEE according to this application;

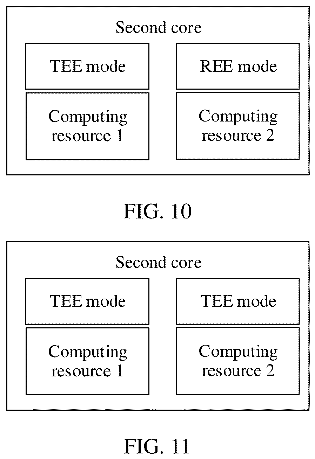

FIG. 10 is a diagram of a scenario in which an REE mode and a TEE mode are simultaneously run in a processor core; and
FIG. 11 is a diagram of a scenario in which two REE modes are simultaneously run in a processor core according to this application.

### DESCRIPTION OF EMBODIMENTS

The following describes some terms in embodiments of this application, to facilitate understanding by a person skilled in the art.
(1) A processor may be located in a complete system-on-a-chip (system-on-a-chip, SoC) or located in a plurality of independent chips, to implement a function like data computing, processing, or control, and includes a processor core and/or a storage.
(2) A processor core, core for short, is a part of an internal core of a processor. One processor may include one or more processor cores. Each processor core has its own execution logic, register file, computing resource, and the like. Each processor core may execute one or more threads or instructions.
(3) Simultaneous multithreading (simultaneous multithreading, SMT), also referred to as hyper-threading, may be understood as a plurality of threads that are executed by a processor core in parallel. The processor core may be configured to execute one thread at a time or simultaneously execute a plurality of threads. A processor core configured to execute one thread at a time is referred to as being in a single-threaded (single-threaded, ST) mode. A processor core configured to simultaneously execute a plurality of threads is referred to as being in an SMT mode.
(4) Thread-level parallelism (thread-level parallelism, TLP) is a parallelism technology based on resource management and scheduling of a processor core. The technology aims to implement thread-level parallelism, to enable one core to simultaneously execute a plurality of threads, to fully utilize all resources of the processor core.
(5) A trusted execution environment (trusted execution environment, TEE) is a secure computing environment intended to provide a highly protected and isolated execution environment to ensure security of sensitive data and key applications. The TEE protects sensitive data and key operations through hardware and software mechanisms, to prevent malicious software, attackers, and physical attacks from intruding in and tampering with data and computing. A TEE mode exists in a secure zone in a processor core and a storage of an electronic device, and is used to ensure that sensitive data is stored, processed, and protected in a trusted environment. In the TEE mode, authorized security software (namely, a trusted application (trusted application, TA)) can be securely executed. Therefore, end-to-end security may be provided by implementing protection, confidentiality, integrity, and a data access permission. Specifically, the TEE provides a hardware isolation-based secure world to protect security of sensitive data and correct execution of a program. To implement the TEE, all hardware and software resources of a computing device need to be divided into a secure world and a non-secure world. The two worlds have independent system resources (for example, registers, physical memories, and peripherals), and the secure world and the non-secure world cannot randomly exchange data. Code and resources in the secure world are protected by a strict access control policy. A process in the non-secure world is prohibited from accessing the secure world, to prevent sensitive resources stored in the secure world from being accessed or stolen without authorization. This can effectively reduce disclosure of security system vulnerabilities, external attacks, and virus intrusion. For example, the TEE stores sensitive information such as a user identity, a key, and a certificate in a secure area, and the sensitive information can be accessed or modified only by a TA authorized by the TEE. In addition, the TEE provides an encryption and integrity protection mechanism for operation processing of the sensitive information. In addition, the TEE may further provide a secure service for an operating system (for example, Android) in a common execution environment. For example, information (for example, sensitive information such as an address book and an SMS message) of a user in the common execution environment may be encrypted by using a key stored in the TEE, to ensure security of the sensitive information stored in the common execution environment.
(6) A rich execution environment (rich execution environment, REE) is a common execution environment that provides general computing and application running on a computing device. Compared with the trusted execution environment (TEE), the rich execution environment is more universal and open, and does not have a strict security protection and isolation mechanism like that in the TEE. The REE provides a general operating system and runtime environment, for example, Windows, Linux, or Android, to allow a user to install and run various third-party applications. The REE is usually a default execution environment of a computing device, and provides a wide range of applications and functions to meet a general computing requirement of a user. However, compared with the TEE, the REE has lower security, and lacks a dedicated hardware and software protection mechanism. Therefore, additional security measures are needed during processing of sensitive data and a key operation. Therefore, the TEE environment has a higher security level than the REE, and software and hardware resources accessible in the TEE are separated from software and hardware resources accessible in the REE. A client application (client application, CA) (for example, fingerprint collection or a payment application) in the REE may interact with a TA in the TEE by calling an interface. Each TA has one or more corresponding CAs in the REE. In the REE environment, information may be transmitted to an execution TA in the TEE by calling an interface of a CA. The TA completes a corresponding function and then returns a computing result.
(7) In embodiments of this application, "at least one" means one or more, and "at least two" means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. The character "/" usually indicates an "or" relationship between the associated objects. "At least one of the following items (pieces)" or a similar expression thereof indicates any combination of the items, including one of the items (pieces) or any combination of a plurality of the items (pieces). For example, at least one of a, b, and c may indicate a, b, c, a and b, a and c, b and c, or a, b and c, where a, b, and c may be in a singular form or a plural form.
(8) The modifiers "first", "second", and the like mentioned in embodiments of this application are intended to distinguish between a plurality of pieces of modified content, but not to limit sizes, shapes, content, an order, a time sequence, priorities, quantities, importance, or the like of the plurality of pieces of modified content. For example, a first core and a second core are merely intended to distinguish between cores that perform different operations, and do not indicate, without presence of other limiting features, that the cores have different priorities, importance, or the like. In addition, the term "example" in embodiments of this application is used to give an example, an illustration, or a description. Any embodiment or design scheme described as an "example" in this application should not be construed as being more preferred or more advantageous than another embodiment or design scheme. To be precise, the term example is intended to present a concept in a specific manner.

The following describes the technical solutions in embodiments of this application with reference to the accompanying drawings.

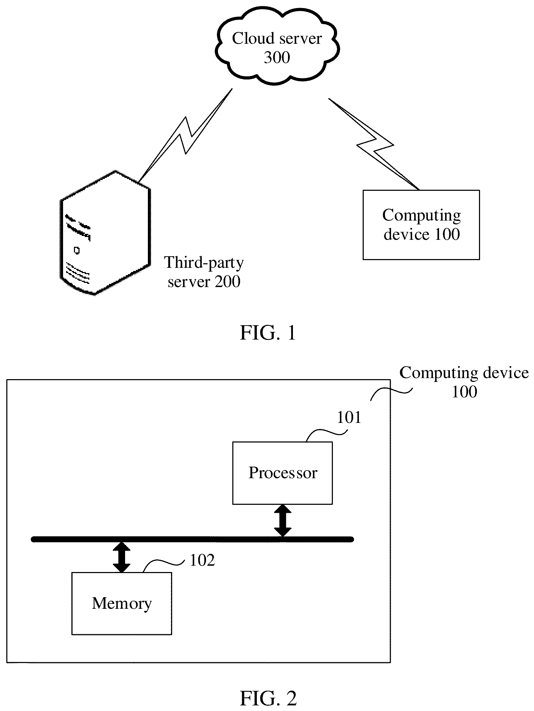

FIG. 1 is a diagram of a system architecture to which an embodiment of this application is applicable. The architecture includes a computing device 100, a third-party server 200, and a cloud server 300. The computing device 100 is any computer, mobile device, or internet of things device, for example, a desktop computer, a notebook computer, a smartphone, a tablet computer, or a sensor. The computing device 100 may run various applications to meet a user requirement. The third-party server 200 is a physical server managed and maintained by an independent service provider, and the third-party server 200 is configured to maintain an application developed by an application developer. For example, the third-party server 200 may be a server that maintains a WeChat application or a game application. The cloud server 300 is a virtual server based on a cloud computing technology. The cloud server 300 may perform operations, such as security detection, security review, security marking, and grouping, on the application maintained by the third-party server 200. The cloud server 300 may perform operations, such as security marking and grouping, on the application based on use frequency, daily active users, an attack record, a special permission, and the like of the application. For example, the cloud server 300 may mark a security level of an application with an attack record as a low level, and set applications whose security levels are low levels as a group; and the cloud server 300 may mark a security level of an application with no attack record as a high level, and set applications whose security levels are low levels as a group. For another example, the cloud server 300 may set a plurality of applications with high use frequency as a group, and set a plurality of applications with low use frequency as another group. In a possible implementation, the computing device 100 may simultaneously run a plurality of applications in a same group, to meet various requirements of a user.

As shown in FIG. 2, the computing device 100 may include a processor 101 and a storage 102. The processor 101 may be a field programmable gate array (field programmable gate array, FPGA), an application-specific integrated circuit (application-specific integrated circuit, ASIC), a system-on-a-chip (system-on-a-chip, SoC), a central processing unit (central processing unit, CPU), a network processor (network processor, NP), a digital signal processing circuit (digital signal processor, DSP), a microcontroller (microcontroller unit, MCU), a programmable controller (programmable logic device, PLD), or another integrated chip, or may include any one or more of the foregoing devices. This is not specifically limited in this embodiment of this application.

The storage 102 is configured to store program instructions, data, and the like. Specifically, the program instructions may include program code, and the program code includes computer operation instructions. The processor 101 may execute the program instructions stored in the storage 102, and implement a function of the computing device 100 by using the data stored in the storage 102. The storage 102 may be a volatile memory or a non-volatile memory, or the storage 102 may include a volatile memory and a non-volatile memory. Optionally, the computing device further includes a communication interface. The storage 102 is coupled to the processor 101 through the communication interface, so that the processor 101 reads, through the communication interface, the program instructions stored in the storage 102.

It should be understood that a connection medium between the processor 101, the storage 102, and the communication interface is not limited in this embodiment of this application. In this embodiment of this application, in FIG. 2, the storage 102, the processor 101, and the communication interface are connected through a communication bus. The bus is represented by a bold line in FIG. 2. A manner of connection between other components is merely an example for description, and does not constitute a limitation. The bus may include an address bus, a data bus, a control bus, and the like. For ease of representation, only one bold line is used in FIG. 2 for representation, but this does not mean that there is only one bus or only one type of bus.

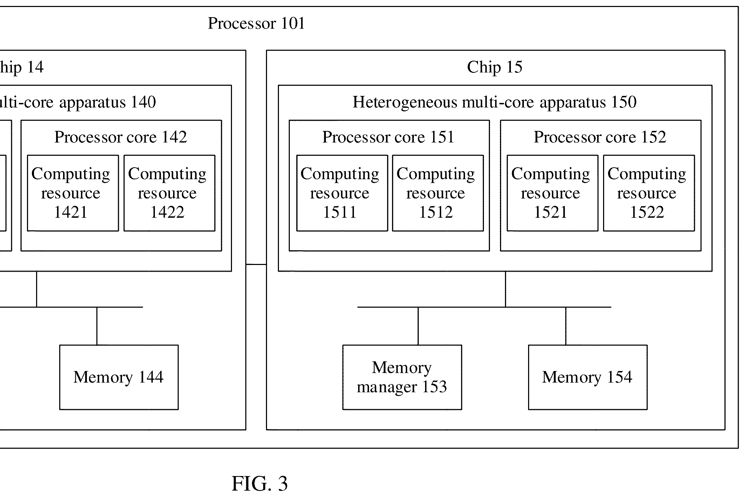

In this embodiment of this application, the processor 101 may include one or more chips, and the processor 101 may be implemented by using a heterogeneous multi-core architecture. For example, FIG. 3 is a diagram of a possible structure of the processor 101. In FIG. 3, the processor 101 includes a chip 14 and a chip 15. The chip 14 and the chip 15 are connected through a bus. The bus may be any one or more of a data bus, a power bus, a control bus, a status signal bus, and the like. The bus may alternatively be another type of bus that implements a connection between components in the processor 101, for example, a quick path interconnect (intel quick path interconnect, QPI) bus.

Each chip in the processor 101 uses a heterogeneous multi-core architecture. The chip 14 and the chip 15 are used below as an example to describe components in each chip and a connection manner. The chip 14 includes a heterogeneous multi-core apparatus 140, a memory 144, and a memory manager 143. The heterogeneous multi-core apparatus 140, the memory 144, and the memory manager 143 are interconnected through an on-chip bus. The heterogeneous multi-core apparatus 140 includes a plurality of processor cores (for example, a processor core 141 and a processor core 142). When each processor core is configured to be in an SMT mode, the processor core may execute a plurality of threads in parallel. Hardware resources, in hardware units, that are used by a processor core to process each thread are a logical CPU from a logical perspective, and may also be referred to as computing resources. In addition, computing resources used by a processor core to execute different threads may be the same or different. For example, a logical CPU in the processor core 141 includes a computing resource 1411 and a computing resource 1412. The processor core 141 may execute a thread 1 by using the computing resource 1411, and the processor core 141 may execute a thread 2 by using the computing resource 1412. A logical CPU in the processor core 142 includes a computing resource 1421 and a computing resource 1422. The processor core 142 may execute a thread 3 by using the computing resource 1421, and the processor core 142 may execute a thread 4 by using the computing resource 1422. The memory 144 is an internal memory that directly exchanges data with a computing resource in the heterogeneous multi-core apparatus 140. The memory 144 supports data reading and writing at any time at a quite high speed, and serves as a temporary data memory for an operating system or another running program. The memory 144 may be, for example, a static random access memory (static random access memory, SRAM). The memory manager 143 is configured to manage and plan data transmission from the memory 144 to any one of the computing resource 1411, the computing resource 1412, the computing resource 1421, and the computing resource 1422. The memory manager 143 may be an independent chip outside the chip 14, or may be a module integrated in the chip 14, as shown in FIG. 3.

The chip 15 includes a heterogeneous multi-core apparatus 150, a memory 154, and a memory manager 153. The heterogeneous multi-core apparatus 150, the memory 154, and the memory manager 153 are interconnected through an on-chip bus. The heterogeneous multi-core apparatus 150 includes a plurality of processor cores (for example, a processor core 151 and a processor core 152). When each processor core is configured to be in an SMT mode, the processor core may execute a plurality of threads in parallel. Hardware resources, in hardware units, that are used by a processor core to process each thread are a logical CPU from a logical perspective, and may also be referred to as computing resources. In addition, computing resources used by a processor core to execute different threads may be the same or different. For example, a logical CPU in the processor core 151 includes a computing resource 1511 and a computing resource 1512. The processor core 151 may execute a thread 5 by using the computing resource 1511, and the processor core 151 may execute a thread 6 by using the computing resource 1512. A logical CPU in the processor core 152 includes a computing resource 1521 and a computing resource 1522. The processor core 152 may execute a thread 7 by using the computing resource 1521, and the processor core 152 may execute a thread 8 by using the computing resource 1522. The memory 154 is an internal memory that directly exchanges data with a computing resource in the heterogeneous multi-core apparatus 150. The memory 154 supports data reading and writing at any time at a quite high speed, and serves as a temporary data memory for an operating system or another running program. The memory 154 may be, for example, an SRAM. The memory manager 153 is configured to manage and plan data transmission from the memory 154 to any one of the computing resource 1511, the computing resource 1512, the computing resource 1521, and the computing resource 1522. The memory manager 153 may be an independent chip outside the chip 15, or may be a module integrated in the chip 15, as shown in FIG. 3.

In some possible embodiments, the heterogeneous multi-core apparatus 140 or the heterogeneous multi-core apparatus 150 may be a separate chip or chip module outside the chip 14 and the chip 15. To be specific, the heterogeneous multi-core apparatus, the memory, and the memory manager may not be located in one chip, so that the memory and the memory manager may be located in an additional chip. It should be understood that the processor 101 may include more or fewer chips, and the heterogeneous multi-core apparatus 140 or the heterogeneous multi-core apparatus 150 may include more or fewer processor cores. This is not specifically limited in this embodiment of this application.

A processor core in the processor 101 may run an operating system, to implement various software functions of the processor 101. The operating system may run various applications, convert tasks generated by various applications into to-be-executed threads, and allocate the to-be-executed threads to the processor core for execution. The processor core that runs the operating system may be one or more processor cores in the processor 101. For example, the operating system may be run by any one of the processor core 141, the processor core 142, the processor core 151, or the processor core 152. For another example, the operating system may be run on both the processor core 141 and the processor core 142.

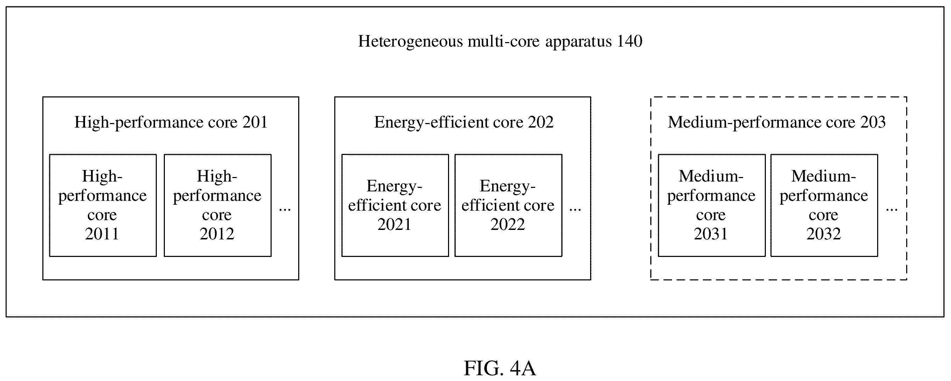

It should be understood that, for energy consumption and performance of the plurality of processor cores in the heterogeneous multi-core apparatus 140 or the heterogeneous multi-core apparatus 150, the plurality of processor cores in the heterogeneous multi-core apparatus 140 or the heterogeneous multi-core apparatus 150 may be classified into at least one of the following types: a high-performance core, an energy-efficient core, or a medium-performance core. For example, a structure of the heterogeneous multi-core apparatus 140 may alternatively be shown in FIG. 4A. In FIG. 4A, the heterogeneous multi-core apparatus 140 includes a high-performance core 201 and an energy-efficient core 202, to form a big-core-and-small-core architecture. The high-performance core 201 includes at least one high-performance core, for example, a high-performance core 2011 and a high-performance core 2012. The energy-efficient core 202 includes at least one energy-efficient core, for example, an energy-efficient core 2021 and an energy-efficient core 2022. Maximum power consumption of any one of the at least one high-performance core is greater than maximum power consumption of any one of the at least one energy-efficient core. A maximum computing capacity of any one of the at least one high-performance core is greater than a maximum computing capacity of any one of the at least one energy-efficient core. That is, the high-performance core has higher performance, and the energy-efficient core has lower performance than the high-performance core but has higher energy efficiency. In this way, an appropriate computing resource can be allocated to a to-be-executed thread based on characteristics of the high-performance core and the energy-efficient core, so that a resource is allocated to the to-be-executed thread more flexibly, to fully utilize performance of a big core and a small core.

Optionally, the heterogeneous multi-core apparatus 140 may further include a medium-performance core 203. The medium-performance core 203 includes at least one medium-performance core, for example, a medium-performance core 2031 and a medium-performance core 2032. Maximum power consumption of any one of the at least one high-performance core is greater than maximum power consumption of any one of the at least one medium-performance core. A maximum computing capacity of any one of the at least one high-performance core is greater than a maximum computing capacity of any one of the at least one medium-performance core. Maximum power consumption of any one of the at least one medium-performance core is greater than maximum power consumption of any one of the at least one energy-efficient core. A maximum computing capacity of any one of the at least one medium-performance core is greater than a maximum computing capacity of any one of the at least one energy-efficient core. In this way, the high-performance core, the energy-efficient core, and the medium-performance core are disposed in the heterogeneous multi-core apparatus, so that resources are allocated to threads more flexibly. The high-performance core, the energy-efficient core, and the medium-performance core form a tri-cluster architecture, to better adapt to diverse performance requirements of different threads.

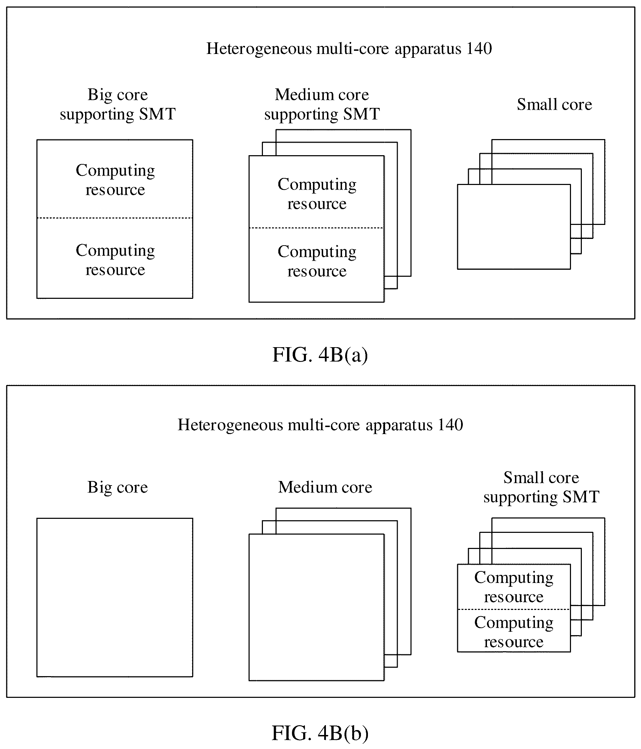

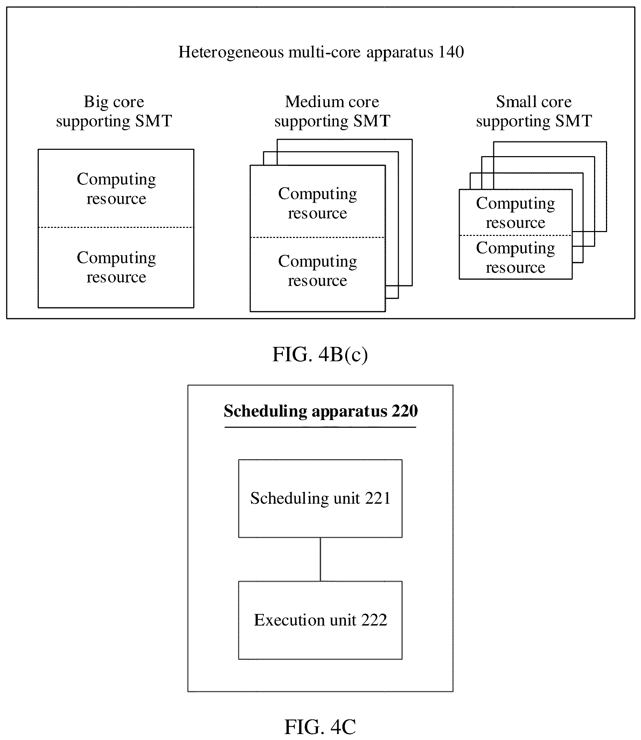

In some embodiments, the high-performance core 201 may also be referred to as a big core, the medium-performance core 203 may also be referred to as a medium core, and the energy-efficient core 202 may also be referred to as a small core. For example, FIG. 4B(a), FIG. 4B(b), and FIG. 4B(c) are a diagram of a structure of the heterogeneous multi-core apparatus 140 including a big core, a medium core, and a small core. In FIG. 4B(a), the big core and the medium core in the heterogeneous multi-core apparatus 140 support the SMT, and the small core does not support the SMT. In FIG. 4B(b), the small core in the heterogeneous multi-core apparatus 140 supports the SMT, and the big core and the medium core do not support the SMT. In FIG. 4B(c), all of the small core, the big core, and the medium core in the heterogeneous multi-core apparatus 140 support the SMT. It can be learned that there are a plurality of implementations in which the heterogeneous multi-core apparatus 140 is used to implement the SMT mode.

As shown in FIG. 4C, one or more cores in the heterogeneous multi-core apparatus 140 may further include a scheduling apparatus 220 shown in FIG. 4C, and the scheduling apparatus 220 includes a scheduling unit 221 and an execution unit 222. The scheduling unit 221 and the execution unit 222 may be implemented by using software, or may be implemented by using a combination of hardware and software. Related software may include software computer instructions that are run on the one or more cores of the heterogeneous multi-core apparatus. The following separately describes the two manners.

### 1. Implementation through software

Specifically, the scheduling unit 221 may be implemented by using a scheduling algorithm run by a first core in the heterogeneous multi-core apparatus 140, and may include a software computer instruction that is correspondingly run in the first core. The execution unit 222 may be implemented by using pipeline micro-architecture software run by a second core in the heterogeneous multi-core apparatus 140, and the pipeline micro-architecture software may include a software computer instruction that is correspondingly run in the second core.

### 2. Implementation through a combination of hardware and software

Specifically, the scheduling unit 221 may be implemented by a first core in the heterogeneous multi-core apparatus 140 by running corresponding software, that is, includes a combination of the first core and the corresponding software. The execution unit 222 may be implemented by a second core in the heterogeneous multi-core apparatus 140 by running corresponding software, that is, includes a combination of the second core and the corresponding software.

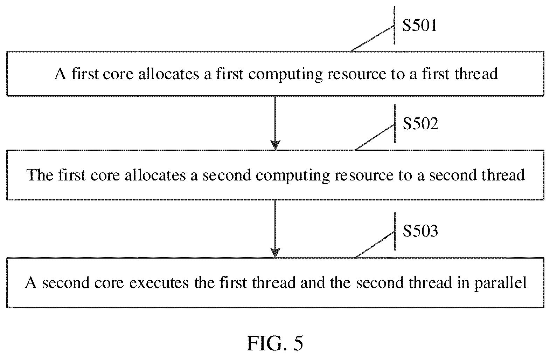

Based on the computing device 100 and the heterogeneous multi-core apparatus 140, embodiments of this application provide a scheduling method, to improve utilization of computing resources in a heterogeneous multi-core apparatus, and further improve peak computing power of the heterogeneous multi-core apparatus. The scheduling method provided in embodiments of this application is described below with reference to FIG. 5.

FIG. 5 is a first schematic flowchart of a scheduling method according to an embodiment of this application. The method may be implemented by an operating system or another type of driver software or application software and performed by a processor core (for example, the processor core 141 in FIG. 3) that runs the operating system. In FIG. 5, the first core and the second core in the heterogeneous multi-core apparatus 140 are used as an example to describe a scheduling solution provided in this embodiment of this application. The first core may be any one of a high-performance core, a medium-performance core, or an energy-efficient core in the heterogeneous multi-core apparatus 140. The second core may be the first core or another core in the heterogeneous multi-core apparatus 140 that is different from the first core. The another core may also be any one of a high-performance core, a medium-performance core, or an energy-efficient core. The scheduling method includes the following steps.

S501: The first core allocates a first computing resource to a first thread. The first thread may include one or more threads.

S502: The first core allocates a second computing resource to a second thread. The second thread may include one or more threads.

In this embodiment of this application, when the first core runs an operating system, the first thread and the second thread may be a plurality of threads created by the operating system. The first thread and the second thread may be threads corresponding to a same task of a same application, or the first thread and the second thread may be threads corresponding to different tasks of a same application, or the first thread and the second thread may be threads corresponding to different applications.

In a possible implementation, the first core may allocate the first computing resource in the second core to the first thread according to a performance requirement of the first thread; and allocate the second computing resource in the second core to the second thread according to a performance requirement of the second thread. In this way, a computing resource is flexibly allocated to each thread according to a performance requirement of each thread, instead of configuring a fixed resource for each thread, to adapt to diverse requirements of different threads. Optionally, the performance requirement of the first thread is represented by at least one of delay sensitivity, a service scenario, or user experience of the first thread, and the performance requirement of the second thread is represented by at least one of delay sensitivity, a service scenario, or user experience of the second thread. To sum up, when a plurality of threads have higher performance requirements, for example, need a low delay, a high computing speed, or high computing power, a core with higher performance needs to be selected from the plurality of cores, and computing resources are allocated, on the core, to the plurality of threads. Performance of the selected core matches the performance requirements of the plurality of threads. To be specific, the performance requirements of the plurality of threads can be met without performance waste caused by excessive performance. For example, when a plurality of threads need to be executed, the first core selects an appropriate core, namely, the second core, from the plurality of cores, and serves the plurality of threads by using computing resources of the selected core, to implement an SMT mode. The selected core may be the first core or another core. This is not limited in this embodiment. When the first core determines that the plurality of threads have low performance requirements, the selected core is an energy-efficient core with low performance, to reduce power consumption. When the first core determines that the plurality of threads have medium performance requirements, the selected core is a medium-performance core with medium performance, to achieve a tradeoff between performance and power consumption. When the first core determines that the plurality of threads have high performance requirements, the selected core is a high-performance core, to preferentially meet the performance requirements. After determining the selected second core, the first core further allocates the first computing resource in the second core and the second computing resource to the first thread and the second thread respectively according to the performance requirement of the first thread and the performance requirement of the second thread, to meet a specific requirement of each thread.

It can be learned from the foregoing descriptions that computing capacities and power consumption of the high-performance core, the medium-performance core, and the energy-efficient core in the heterogeneous multi-core apparatus 140 differ to some extent. A maximum computing capacity of the high-performance core is greater than a maximum computing capacity of the medium-performance core, and the maximum computing capacity of the medium-performance core is greater than a maximum computing capacity of the energy-efficient core. Maximum power consumption of the high-performance core is less than maximum power consumption of the medium-performance core, and the maximum power consumption of the medium-performance core is less than maximum power consumption of the energy-efficient core. Therefore, the first core may allocate a computing resource to the first thread according to the performance requirement of the first thread based on characteristics of the high-performance core, the medium-performance core, and the energy-efficient core in the heterogeneous multi-core apparatus 140. Similarly, the first core may allocate a computing resource to the second thread according to the performance requirement of the second thread based on the characteristics of the high-performance core, the medium-performance core, and the energy-efficient core in the heterogeneous multi-core apparatus 140. In this way, matching is performed between the performance requirement of the first thread and the performance requirement of the second thread and resources of various types of cores in the heterogeneous multi-core apparatus 140, to effectively improve resource utilization of the heterogeneous multi-core apparatus 140.

For example, the first thread has high delay sensitivity, and the first core may allocate a computing resource of the high-performance core (namely, a big core) to the first thread, so that the first thread can be quickly executed, to effectively reduce execution duration of the first thread, and effectively meet the delay sensitivity of the first thread. Correspondingly, the second thread has low delay sensitivity, and the first core may allocate a computing resource of the medium-performance core (namely, a medium core) or the energy-efficient core (namely, a small core) to the second thread. Because power consumption of the medium-performance core (namely, the medium core) or the energy-efficient core (namely, the small core) is low, when the second thread is executed by using the computing resource of the medium-performance core (namely, the medium core) or the energy-efficient core (namely, the small core), power consumption generated by executing the second thread can be effectively reduced.

For another example, if the service scenario of the first thread is a call scenario, the service scenario of the second thread is an application update scenario, and a real-time performance requirement of the service scenario of the first thread is higher than a real-time performance requirement of the service scenario of the second thread, the first core may allocate a computing resource of the high-performance core (namely, a big core) to the first thread, and allocate a computing resource of the medium-performance core (namely, a medium core) or the energy-efficient core (namely, a small core) to the second thread. In this way, the first thread can be quickly executed, to effectively meet the real-time performance requirement of the service scenario of the first thread, and power consumption generated by executing the second thread can be effectively reduced when the real-time performance requirement of the service scenario of the second thread is met.

For another example, if the first thread is a thread of a game application, the second thread is a system update thread, and a user experience requirement of the first thread is higher than a user experience requirement of the second thread, the first core may allocate a computing resource of the high-performance core (namely, a big core) to the first thread, and allocate a computing resource of the medium-performance core (namely, a medium core) or the energy-efficient core (namely, a small core) to the second thread. In this way, the first thread can be quickly executed, to effectively meet the user experience requirement of the first thread, and power consumption generated by executing the second thread can be effectively reduced when the user experience requirement of the second thread is met.

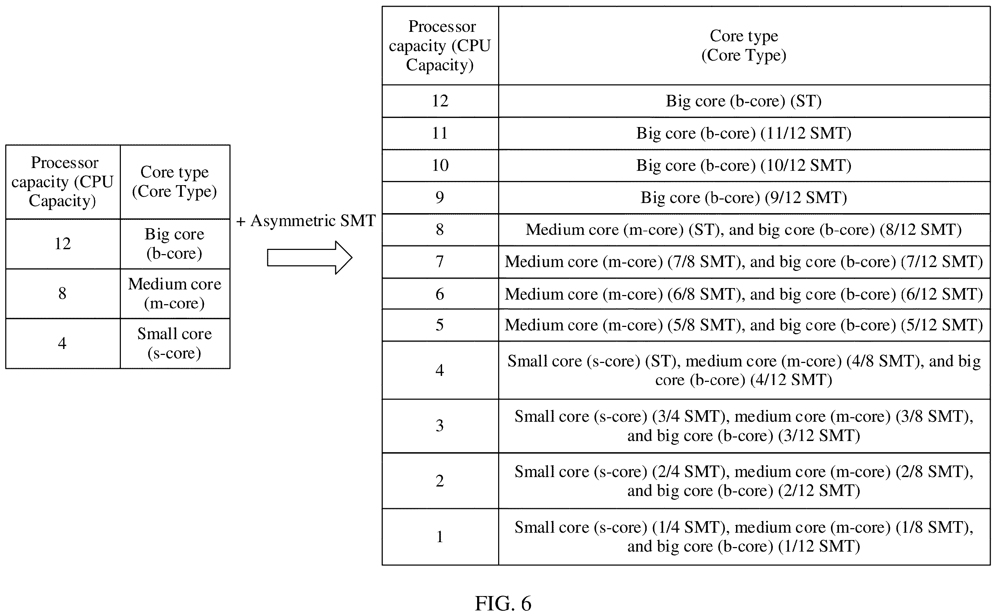

As shown in FIG. 6, in some possible implementations, the computing resources of the high-performance core (namely, the big core (big core, b-core)), the medium-performance core (namely, the medium core (medium core, m-core)), and the energy-efficient core (namely, the small core (small core, s-core)) may be represented by dimensionless processor capacities (central processing unit capacity, CPU capacity). A CPU capacity of the big core is 12, a CPU capacity of the medium core is 8, and a CPU capacity of the small core is 4. In addition, the first core may flexibly allocate the computing resources of the big core, the medium core, and the small core, to form computing resources with CPU capacities ranging from 1 to 12, as shown in FIG. 6. In this way, the heterogeneous multi-core apparatus can provide diverse computing power supply capacities, to meet computing power requirements of a plurality of threads.

Correspondingly, the first core may allocate a computing resource to the first thread or the second thread based on a table shown in FIG. 6.

For example, if a CPU capacity corresponding to the performance requirement of the first thread is 12, the first computing resource allocated by the first core to the first thread is all computing resources of a big core.

For another example, a CPU capacity corresponding to the performance requirement of the first thread is 11, a CPU capacity corresponding to the performance requirement of the second thread is 1, the first computing resource allocated by the first core to the first thread is 11/12 of computing resources of a big core, and the first computing resource allocated by the first core to the second thread is 1/12 of computing resources of a big core.

For another example, a CPU capacity corresponding to the performance requirement of the first thread is 10, a CPU capacity corresponding to the performance requirement of the second thread is 2, the first computing resource allocated by the first core to the first thread is 10/12 of computing resources of a big core, and the first computing resource allocated by the first core to the second thread is 2/12 of computing resources of a big core.

For another example, a CPU capacity corresponding to the performance requirement of the first thread is 9, a CPU capacity corresponding to the performance requirement of the second thread is 3, the first computing resource allocated by the first core to the first thread is 9/12 of computing resources of a big core, and the first computing resource allocated by the first core to the second thread is 3/12 of computing resources of a big core.

For another example, a CPU capacity corresponding to the performance requirement of the first thread is 8, and a CPU capacity corresponding to the performance requirement of the second thread is 4. The first computing resource allocated by the first core to the first thread is all computing resources of a medium core, and the second computing resource allocated by the first core to the second thread is all computing resources of a small core. Alternatively, the first computing resource allocated by the first core to the first thread is 8/12 of computing resources of a big core, and the second computing resource allocated by the first core to the second thread is 4/12 of computing resources of a big core.

For another example, a CPU capacity corresponding to the performance requirement of the first thread is 7, and a CPU capacity corresponding to the performance requirement of the second thread is 5. The first computing resource allocated by the first core to the first thread is 7/12 of computing resources of a big core, and the second computing resource allocated by the first core to the second thread is 5/12 of computing resources of a big core. Alternatively, the first computing resource allocated by the first core to the first thread is 7/8 of computing resources of a medium core, and the second computing resource allocated by the first core to the second thread is 5/8 of computing resources of a medium core.

For another example, a CPU capacity corresponding to the performance requirement of the first thread is 6, and a CPU capacity corresponding to the performance requirement of the second thread is 6. The first computing resource allocated by the first core to the first thread is 6/12 of computing resources of a big core, and the second computing resource allocated by the first core to the second thread is 6/12 of computing resources of a big core. Alternatively, the first computing resource allocated by the first core to the first thread is 6/8 of computing resources of a medium core, and the second computing resource allocated by the first core to the second thread is 6/8 of computing resources of a medium core.

For another example, a CPU capacity corresponding to the performance requirement of the first thread is 5, and a CPU capacity corresponding to the performance requirement of the second thread is 7. The first computing resource allocated by the first core to the first thread is 5/12 of computing resources of a big core, and the second computing resource allocated by the first core to the second thread is 7/12 of computing resources of a big core. Alternatively, the first computing resource allocated by the first core to the first thread is 5/8 of computing resources of a medium core, and the second computing resource allocated by the first core to the second thread is 7/8 of computing resources of a medium core.

For another example, a CPU capacity corresponding to the performance requirement of the first thread is 4, and a CPU capacity corresponding to the performance requirement of the second thread is 8. The first computing resource allocated by the first core to the first thread is all computing resources of a small core, and the second computing resource allocated by the first core to the second thread is all computing resources of a medium core. Alternatively, the first computing resource allocated by the first core to the first thread is 4/12 of computing resources of a big core, and the second computing resource allocated by the first core to the second thread is 8/12 of computing resources of a big core.

For another example, a CPU capacity corresponding to the performance requirement of the first thread is 3, and a CPU capacity corresponding to the performance requirement of the second thread is 9. The first computing resource allocated by the first core to the first thread is any one of the following: 3/12 of computing resources of a big core, 3/8 of computing resources of a medium core, and 3/4 of computing resources of a small core; and the second computing resource allocated by the first core to the second thread is 9/12 of computing resources of a big core.

For another example, a CPU capacity corresponding to the performance requirement of the first thread is 2, and a CPU capacity corresponding to the performance requirement of the second thread is 10. The first computing resource allocated by the first core to the first thread may be any one of the following: 2/12 of computing resources of a big core, 2/8 of computing resources of a medium core, and 2/4 of computing resources of a small core; and the second computing resource allocated by the first core to the second thread is 10/12 of computing resources of a big core.

For another example, a CPU capacity corresponding to the performance requirement of the first thread is 1, and a CPU capacity corresponding to the performance requirement of the second thread is 11. The first computing resource allocated by the first core to the first thread may be any one of the following: 1/12 of computing resources of a big core, 1/8 of computing resources of a medium core, and 1/4 of computing resources of a small core; and the second computing resource allocated by the first core to the second thread is 11/12 of computing resources of a big core.

It should be understood that the specific values of the CPU capacities of the big core, the medium core, and the small core in FIG. 6 are merely an example, and are not a limitation on the CPU capacities of the big core, the medium core, and the small core.

In this embodiment of this application, the first computing resource includes a first dedicated computing resource, the second computing resource includes a second dedicated computing resource, and the first dedicated computing resource is different from the second dedicated computing resource. In this way, different dedicated computing resources are allocated to the first thread and the second thread, so that the first thread and the second thread do not interfere with each other when being executed by the second core. Both the first dedicated computing resource and the second dedicated computing resource are hardware resources of the second core. However, a percentage of the first dedicated computing resource in a hardware resource of the second core is different from a percentage of the second dedicated computing resource in the hardware resource of the second core.

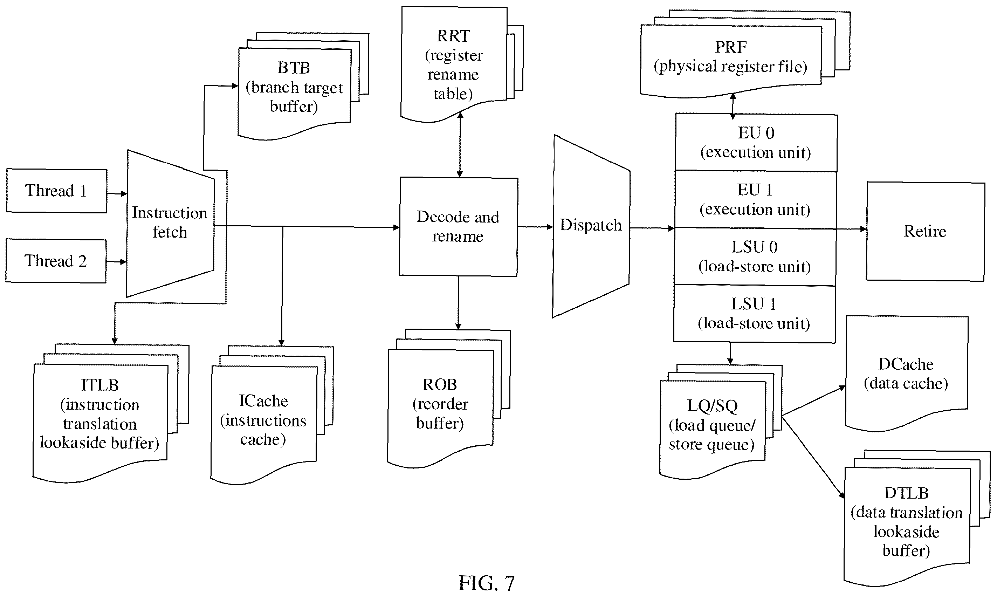

The hardware resource of the second core includes hardware units in a pipeline architecture in which the second core executes a plurality of threads in parallel. For example, FIG. 7 shows a pipeline architecture in which the second core executes a plurality of threads in parallel. The architecture includes an instruction translation lookaside buffer (instruction translation lookaside buffer, ITLB), a data translation lookaside buffer (data translation lookaside buffer, DTLB), an instruction cache (instruction cache, ICache), a data cache (data cache, DCache), a branch target buffer (branch target buffer, BTB), a register rename table (register rename table, RRT), a reorder buffer (reorder buffer, ROB), and a physical register file (physical register file, PRF). The ITLB is configured to cache a translation relationship between a virtual address and a physical address of an instruction. The DTLB is configured to cache a translation relationship between a virtual address and a physical address of data. The ICache is configured to cache an instruction. The DCache is configured to cache recently used data. The BTB is configured to store, to a buffer, an address of a branch instruction that has successfully performed branching and a branch target address of the branch instruction, where the address of the branch instruction is used as an identifier of the buffer. The RRT is configured to implement register renaming, and is configured to rename a source register and a target register (namely, a virtual register) in an instruction as corresponding physical registers. The ROB is configured to store a result of an instruction and execution order information of the instruction, to implement out-of-order execution of the instruction and ensure correctness of the instruction. The PRF is used for register allocation, register renaming, and operand tracking. Therefore, using the hardware units corresponding to the pipeline architecture in FIG. 7 as an example, the hardware resource of the second core includes the ITLB, the ICache, the BTB, the RRT, the PRF, the DTLB, and the DCache. Correspondingly, the first dedicated computing resource or the second dedicated computing resource may include at least one of the following: the ITLB, the ICache, the BTB, the RRT, the PRF, the DTLB, or the DCache.

Optionally, the first core may allocate computing resources to the first thread and the second thread based on a priority of the first thread and a priority of the second thread. For example, when the priority of the first thread is higher than the priority of the second thread, the percentage of the first dedicated computing resource in the hardware resource of the second core is higher than the percentage of the second dedicated computing resource in the hardware resource of the second core. The priority of the first thread or the priority of the second thread may be represented by at least one of the delay sensitivity, the service scenario, or the user experience.

For example, if the first thread is a thread of a call application, the second thread is a thread of a reading application, and the delay sensitivity of the first thread is higher than the delay sensitivity of the second thread, the priority of the first thread is higher than the priority of the second thread. Correspondingly, the first dedicated computing resource is 70% of resources in the ITLB and 70% of resources in the DTLB, and the second dedicated computing resource is 30% of the resources in the ITLB and 30% of the resources in the DTLB.

For another example, if the service scenario of the first thread is a call scenario, the service scenario of the second thread is an application update scenario, and a real-time performance requirement of the service scenario of the first thread is higher than a real-time performance requirement of the service scenario of the second thread, the priority of the first thread is higher than the priority of the second thread. Correspondingly, the first dedicated computing resource includes 60% of resources in the ITLB, 60% of resources in the DTLB, 60% of resources in the ICache, and 60% of resources in the DCache, and the second dedicated computing resource includes 40% of the resources in the ITLB, 40% of the resources in the DTLB, 40% of the resources in the ICache, and 40% of the resources in the DCache.

For another example, if the first thread is a thread of a game application, the second thread is a system update thread, and a user experience requirement of the first thread is higher than a user experience requirement of the second thread, the priority of the first thread is higher than the priority of the second thread. Correspondingly, the first dedicated computing resource includes 80% of resources in the ITLB, 80% of resources in the DTLB, 80% of resources in the ICache, and 80% of resources in the DCache, and the second dedicated computing resource includes 20% of the resources in the ITLB, 20% of the resources in the DTLB, 20% of the resources in the ICache, and 20% of the resources in the DCache.

S503: The second core executes the first thread and the second thread in parallel. In S503, the second core executes the first thread by using the first computing resource, and executes the second thread by using the second computing resource.

In S503, the second core executes the first thread and the second thread in parallel. This can effectively improve utilization of computing resources in the heterogeneous multi-core apparatus, to effectively improve peak computing power of the heterogeneous multi-core apparatus.

It can be learned from the foregoing descriptions that the first computing resource includes the first dedicated computing resource, and the second computing resource includes the second dedicated computing resource. Correspondingly, the second core executes the first thread by using the first dedicated computing resource, and the second core executes the second thread by using the second dedicated computing resource.

Further, the first computing resource and the second computing resource may further include a shared computing resource, and the shared computing resource is a hardware resource of the second core. Correspondingly, the second core executes the first thread by using the first dedicated computing resource and the shared computing resource, and the second core executes the second thread by using the second dedicated computing resource and the shared computing resource. When the second core executes the first thread and the second thread in parallel, the second core may use the shared computing resource through time division multiplexing.

Optionally, when the priority of the first thread is higher than the priority of the second thread, time at which the first thread uses the shared computing resource is prior to time at which the second thread uses the shared computing resource. To be specific, time at which the second core executes the first thread by using the shared computing resource is prior to time at which the second core executes the second thread by using the shared computing resource. In addition, when the priority of the first thread is the same as the priority of the second thread, time at which the second core executes the first thread by using the shared computing resource and time at which the second core executes the second thread by using the shared computing resource are not limited in this embodiment of this application.

Still refer to FIG. 7. When the hardware resource of the second core includes the ITLB, the ICache, the BTB, the RRT, the PRF, the DTLB, and the DCache, the shared computing resource may include at least one of the ITLB, the ICache, the BTB, the RRT, the PRF, the DTLB, or the DCache.

For example, if the shared computing resource includes the ICache, the BTB, the RRT, the PRF, and the DCache, the second core may execute the first thread and the second thread in parallel by using the ICache, the BTB, the RRT, the PRF, and the DCache through time division multiplexing. In addition, when the priority of the first thread is higher than the priority of the second thread, time at which the second core executes the first thread by using the ICache is prior to time at which the second core executes the second thread by using the ICache, time at which the second core executes the first thread by using the BTB is prior to time at which the second core executes the second thread by using the BTB, time at which the second core executes the first thread by using the RRT is prior to time at which the second core executes the second thread by using the RRT, time at which the second core executes the first thread by using the PRF is prior to time at which the second core executes the second thread by using the PRF, and time at which the second core executes the first thread by using the DCache is prior to time at which the second core executes the second thread by using the DCache.

For another example, if the shared computing resource includes the BTB, the RRT, and the PRF, the second core may execute the first thread and the second thread in parallel by using the BTB, the RRT, and the PRF through time division multiplexing. In addition, when the priority of the first thread is higher than the priority of the second thread, time at which the second core executes the first thread by using the BTB is prior to time at which the second core executes the second thread by using the BTB, time at which the second core executes the first thread by using the RRT is prior to time at which the second core executes the second thread by using the RRT, and time at which the second core executes the first thread by using the PRF is prior to time at which the second core executes the second thread by using the PRF.

For another example, the shared computing resource includes the RRT and the PRF, and the second core executes the first thread and the second thread in parallel by using the RRT and the PRF through time division multiplexing. The priority of the first thread is the same as the priority of the second thread. Time at which the second core executes the first thread by using the RRT may be earlier than or later than time at which the second core executes the second thread by using the RRT, and time at which the second core executes the first thread by using the PRF is earlier than or later than time at which the second core executes the second thread by using the PRF.

In this embodiment of this application, a basic unit for executing a program by the second core is a thread. A thread may be considered as an independent execution sequence, and includes a series of instructions that need to be executed in the second core. As a basic unit of an operation to be performed in a processor, an instruction is machine code represented in a binary form, and indicates a specific operation to be performed by the second core, for example, addition, multiplication, or memory reading and writing. The instruction usually includes an operation code (used to specify an operation type) and an operand (used to specify a source and a target of an operation). Correspondingly, when the second core executes a plurality of threads in parallel, the second core may execute a plurality of instructions of the plurality of threads in parallel. In the second core, a series of instructions may be generated for each to-be-executed thread, and the series of instructions of the thread are sent to an instruction pipeline of the second core for execution. The instruction pipeline includes a plurality of processing phases, and a specific operation (for example, instruction fetch, decoding, execution, memory access, or write-back) of an instruction is performed in each phase. In the second core that supports multithreading, a thread scheduler may select instructions of a plurality of threads to alternately execute processing phases of different threads, to be specific, execute instructions of different threads in different clock cycles.

Still refer to FIG. 7. In FIG. 7, for example, the first thread is a thread 1, and the second thread is a thread 2. With reference to FIG. 7, a specific process in which the second core can execute the first thread and the second thread in parallel is described below from a perspective of instruction execution of the thread 1 and the thread 2. The process includes the following steps.

### (1) Instruction fetch (instruction fetch):

In the instruction fetch phase, the second core is responsible for obtaining an instruction of the thread 1 and an instruction of the thread 2, and caching the instruction of the thread 1 and the instruction of the thread 2 in the ITLB. In addition, in the instruction fetch phase, the second core may predict target addresses of branch instructions of the thread 1 and the thread 2 through a branch predictor, and store, to a buffer through the BTB, an address of a branch instruction that has successfully performed branching and a branch target address of the branch instruction, where the address of the branch instruction is used as an identifier of the buffer, to fetch an instruction of a correct branch path.

The second core may implement the instruction fetch phase of the thread 1 and the thread 2 based on a priority of the thread 1 and a priority of the thread 2. For example, if the priority of the thread 1 is higher than the priority of the thread 2, the second core preferentially obtains the instruction of the thread 1 from a memory, and then obtains the instruction of the thread 2 from the memory after obtaining the instruction of the thread 1; or the second core preferentially obtains the instruction of the thread 1 from a memory, and obtains the instruction of the thread 2 from the memory only when the instruction of the thread 1 cannot be fetched from the memory. For another example, if the priority of the thread 1 is the same as the priority of the thread 2, the second core obtains the instruction of the thread 1 and the instruction of the thread 2 from a memory in turn.

### (2) Decode and rename (instruction decode and register renaming):

In the decode phase, the second core may decode the instruction of the thread 1 and the instruction of the thread 2, and convert the instructions into internal control signals and operands. In addition, the decode phase further includes the register rename phase. In the register rename phase, the RRT renames source registers and target registers (namely, virtual registers) in the instruction of the thread 1 and the instruction of the thread 2 as corresponding physical registers, to avoid a data dependency relationship between the instruction of the thread 1 and the instruction of the thread 2, and improve instruction-level parallelism.

In the decode phase and the rename phase, in the case of out-of-order execution, the instruction of the thread 1 and the instruction of the thread 2 may enter the ROB in any order, and after execution is completed, results are committed according to an order of an original instruction sequence.

### (3) Dispatch (dispatch):

In the dispatch phase, the second core is responsible for dispatching, to an execution unit (execution unit, EU) for execution, instructions obtained by decoding the instruction of the thread 1 and the instruction of the thread 2. The EU includes various functional units, such as an arithmetic logic unit (arithmetic logic unit, ALU) and a floating-point operation unit (floating-point unit, FPU). Correspondingly, the EU may perform arithmetic operations, logic operations, shift operations, and the like corresponding to various instructions. When the second core executes a plurality of threads in parallel, each thread may independently use the EU, to implement instruction-level parallel processing. For example, the instruction of the thread 1 is executed by an EU 0, and the instruction of the thread 2 is executed by an EU 1.

In addition, in the dispatch phase, the second core processes a memory access instruction (that is, a load instruction and a store instruction) of the thread 1 and the thread 2 through a load-store unit (load-store unit, LSU), to implement a read/write operation between the second core and the memory, and is responsible for transmission and caching of data related to the thread 1 and the thread 2. When the load instruction executed by the LSU needs to access the memory, the LSU performs address translation through the DTLB to translate a virtual address into a corresponding physical address, and then accesses the memory in physical address space. Because the DCache stores recently used data, when the load instruction executed by the LSU needs to read data, the LSU first searches the DCache for the needed data. If the data is in the DCache, the LSU may directly obtain the data from the DCache, to avoid a delay caused by accessing a main memory. If the data is not in the DCache, the LSU obtains the data from the main memory and loads the data to the DCache for subsequent access. In addition, the LSU maintains a store queue (store queue, SQ) and a load queue (load queue, LQ), to effectively manage execution orders of store instructions and load instructions. This effectively improves instruction-level parallelism and memory access efficiency, and therefore improves performance of a processor. A function of the SQ is to process store instructions (store instructions). The SQ tracks a target address and to-be-written data of each store instruction, and maintains an execution order of the store instructions. The SQ further checks a data dependency relationship between store instructions, to ensure that a previous load instruction is completed before a store instruction, to avoid data contention and a memory consistency issue. A function of the LQ is to process load instructions (load instructions). The LQ tracks a target address of each load instruction, maintains an execution order of the load instructions, and checks a data dependency relationship between a load instruction and a store instruction, to ensure that a load instruction is executed only after a corresponding store instruction is completed, to ensure that correct data is read. When the second core executes a plurality of threads in parallel, each thread may independently use the LSU, to implement independent access to the memory. For example, the instruction of the thread 1 is executed by an LSU 0, and the instruction of the thread 2 is executed by an LSU 2.

The second core may implement the dispatch phase of the priority of the thread 1 and the priority of the thread 2 based on the priority of the thread 1 and the priority of the thread 2. For example, if the priority of the thread 1 is higher than the priority of the thread 2, the second core preferentially dispatches the instruction of the thread 1 to the LSU 0, and then dispatches the instruction of the thread 2 to the LSU 1 after the dispatching of the instruction of the thread 1 is completed; or the second core preferentially dispatches the instruction of the thread 1 to the LSU 0, and when wait time of an access instruction of the thread 1 in the SQ is greater than a preset threshold, the second core dispatches the instruction of the thread 2 to the LSU 1. For another example, if the priority of the thread 1 is the same as the priority of the thread 2, the second core dispatches the instruction of the thread 1 to the LSU 0 and dispatches the instruction of the thread 2 to the LSU 1 in turn.

In addition, in the dispatch phase, a set of physical registers needs to be allocated to each instruction of the thread 1 and the thread 2 to store operands and results. In this case, the PRF maintains a pool of available physical registers, and assigns the physical registers to instructions. In addition, the PRF may rename a logical register as a physical register by using a register renaming technology, to avoid a data correlation between the instruction of the thread 1 and the instruction of the thread 2, so that the instruction of the thread 1 and the instruction of the thread 2 can be executed in parallel. In addition, the PRF may track, as operands, physical registers used by the instruction of the thread 1 and the instruction of the thread 2. This can ensure that the operands of the instruction of the thread 1 and the instruction of the thread 2 are accurate and are consistent with previous instruction execution results.

### (4) Retire (retire):

In the retire phase, instructions executed by the thread 1 and the thread 2 are marked as committed, and the instructions are written into a status register, or related data in the memory is updated. If an exception or interruption occurs during execution, the exception is handled in the retire phase. The retire phase ensures that an exception handler is correctly executed, and a pipeline is aborted or restarted when necessary. In addition, even if out-of-order execution occurs in the pipeline, the retire phase ensures that results of instructions are correctly committed according to an original order of programs.

The "memory" in the foregoing process may be understood as a memory in a chip integrated in a heterogeneous multi-core apparatus in which the second core is located, for example, may be the memory 144 or the memory 154 in FIG. 3. In some possible embodiments, the heterogeneous multi-core apparatus 140 further includes a third core. The third core is another core different from the second core. The another core may be any one of a high-performance core, a medium-performance core, or an energy-efficient core in the heterogeneous multi-core apparatus 140. The third core also supports the SMT mode. As shown in FIG. 8(a)-1 and FIG. 8(a)-2, when the second core executes a thread 1, the third core executes a thread 3. As shown in FIG. 8(b)-1 and FIG. 8(b)-2, if the thread 1 causes blocking at a pipeline frontend of the second core and the thread 3 causes blocking at a pipeline backend of the third core, the second core may schedule the thread 3 to the second core for execution, to be specific, the second core executes the thread 1 and the thread 3 in parallel; or the second core may schedule the thread 1 to the third core for execution, to be specific, the third core executes the thread 1 and the thread 3 in parallel. That the thread 1 causes blocking at the pipeline frontend of the second core includes but is not limited to the following cases: In an instruction fetch phase, an instruction of the thread 1 cannot be fetched from the memory, or instructions cached in an ITLB have reached an upper limit and an instruction of the thread 1 cannot be placed into the ITLB; or in a decode phase, an error occurs in decoding an instruction of the thread 1. In addition, that the thread 3 causes blocking at the pipeline backend of the third core includes but is not limited to the following cases: Wait time of an access instruction of the thread 3 in an SQ is greater than a first preset value, or wait time of a load instruction of the thread 3 in an LQ is greater than a second preset value, or the third core cannot access data related to the thread 3 from a DCache. In this way, based on execution statuses of the thread 1 and the thread 3, the thread 1 and the thread 3 are scheduled to a same core for execution, to further improve resource utilization and system performance of the heterogeneous multi-core apparatus 140.

In some possible embodiments, the second core supports the SMT mode and an ST mode, and the second core may control, based on a quantity of threads currently running in an operating system, the second core to switch between the SMT mode and the ST mode. For example, the second core is a big core and a medium core, and the threads currently running in the operating system include a thread 1, a thread 2, a thread 3, and a thread 4. In this case, the big core runs in the SMT mode, so that the big core can execute the thread 1 and the thread 2 in parallel; and the medium core runs in the SMT mode, so that the medium core can execute the thread 3 and the thread 4 in parallel. For another example, the second core is a big core, and the threads currently running in the operating system include a thread 1 and a thread 2. In this case, the big core runs in the SMT mode, so that the big core can execute the thread 1 and the thread 2 in parallel. For another example, the second core is a big core and a medium core, and the threads currently running in the operating system include a thread 1 and a thread 2. In this case, the big core runs in the ST mode, so that the big core executes the thread 1; and the medium core runs in the ST mode, so that the medium core executes the thread 2. For another example, the second core is a big core, and the threads currently running in the operating system include a thread 1. In this case, the big core runs in the ST mode, so that the big core executes the thread 1. In this way, when the quantity of threads currently running in the operating system is small, the second core may be controlled to run in the ST mode, to effectively reduce power consumption of the second core.

It can be learned from the foregoing descriptions that the REE is a common execution environment including an operating system and a user-space application. In an ARM architecture, an exception level (exception level, EL) 0, an EL1, an EL2, and an EL3 are defined. The exception levels have different permissions and functions, to support different operations and tasks. The EL0 is referred to as an exception level without a privilege, and corresponds to a common user-space application. The EL1 is a privilege level for an operating system kernel. At the EL1 level, the operating system kernel may directly access a hardware resource, and manage and schedule an application at the EL0 level. The EL2 is a virtualization privilege level. At the EL2 level, a virtualization hypervisor (virtualization hypervisor) may be run to support a virtualization technology. For example, a virtual machine is run in the ARM architecture. The EL3 is a highest privilege level, also referred to as a secure monitor mode (secure monitor mode), and is the only exception level that supports switching between a secure execution state and a non-secure execution state.

In addition, it can be learned from the foregoing descriptions that the TEE is a trusted execution environment corresponding to the REE, and is configured to process security-sensitive tasks and data. The TEE and the REE may run in two different security domains. To be specific, the TEE corresponds to a secure world, and the REE corresponds to a non-secure world. Correspondingly, in the ARM architecture, a secure exception level 0 (secure EL0, S-EL0), an S-EL1, an S-EL2, and an S-EL3 in the secure world are defined for the TEE. The S-EL0 is a lowest privilege level of the TEE. At the S-EL0 level, the TEE may execute a common user-space task in a security domain, and has a specific privilege to process security-sensitive operations and data. The S-EL1 is a privilege level of the TEE. At the S-EL1 level, the TEE may execute a kernel-level task in the security domain, and has a higher privilege level to manage and protect operations and resources in the TEE. The S-EL2 is a virtualization privilege level of the TEE. At the S-EL2 level, a virtualization hypervisor may be run to support a virtualization technology. For example, a virtual machine is run in the security domain. The S-EL3 is a highest privilege level of the TEE, also referred to as a secure monitor mode (secure monitor mode), and is the only exception level that supports switching between a secure execution state and a non-secure execution state.

FIG. 9 is a diagram of a scenario in which a second core runs two computing resources according to an embodiment of this application. In FIG. 9, the second core includes a computing resource 1 and a computing resource 2. The computing resource 1 and the computing resource 2 may also be referred to as hardware threads (also referred to as logical threads). The second core executes a first thread by using the computing resource 1, and the second core executes a second thread by using the computing resource 2. Both the computing resource 1 and the computing resource 2 have an REE mode and a TEE mode.

In FIG. 9, the REE mode includes an EL1 and an EL2, the EL1 is used to run an REE operating system (operating system, OS) (for example, Linux), and the EL2 is used to run a virtualization hypervisor. The TEE mode includes an S-EL1, an S-EL2, and an S-EL3. A TEE OS and a secure partition (secure partition, SP) are run at the S-EL1. The S-EL2 is used to run a virtualization hypervisor, and a secure monitor is run at the S-EL3. The SP is configured to provide hardware-level security isolation and protection. The secure monitor is configured to implement switching between the REE mode and the TEE mode.

If both the first thread and the second thread are threads corresponding to tasks in the REE mode, when the second core executes the first thread and the second thread in parallel, if one thread triggers a CA/TA procedure, a computing resource corresponding to the thread enters the TEE mode. In this case, the second core simultaneously runs the TEE mode and the REE mode. For example, the first thread triggers a CA/TA procedure, the computing resource 1 enters the TEE mode, and the computing resource 2 corresponding to the second thread still remains in the REE mode. In this case, the second core simultaneously runs the REE mode and the TEE mode (as shown in FIG. 10), leading to a risk of unauthorized access to data in the TEE mode through side channel detection or the like. The CA/TA procedure includes: A CA registers a corresponding TA in the TEE. The CA establishes a secure communication channel to the TEE, to securely interact with the TA. The CA sends a request to the TEE, to request to start the corresponding TA, where the request includes an identifier of the TA to be started and a needed parameter. The TEE verifies the identifier of the TA in the request and ensures integrity and authenticity of the TA. If the verification is successful, the TEE loads the TA and transfers a control right to an execution environment of the TA. The TA performs specific security functions and operations in the TEE. The TA may perform a security operation like key generation, encryption/decryption, or digital signing through a security API provided by the TEE. The TA returns a result to the CA for the CA to perform subsequent processing. After the TA completes a specific operation, the CA may request to terminate and offload the TA.

It can be learned from the foregoing descriptions that a security risk exists when the first thread and the second thread are executed in environments with different security levels. Therefore, in this embodiment of this application, a same security level may be set for the first thread and the second thread, so that the first thread and the second thread can be run in environments with a same security level, to avoid a security risk in a case in which the first thread and the second thread are executed in environments with different security levels. For example, both a security level of the first thread and a security level of the second thread may be set to the TEE mode.

Because the second core executes the first thread by using the computing resource 1 and the second core executes the second thread by using the computing resource 2, a security level of the computing resource 1 and a security level of the computing resource 2 may be adjusted, to make both the security level of the first thread and the security level of the second thread be the TEE mode. Still refer to FIG. 9. A process of adjusting the security level of the computing resource 1 and the security level of the computing resource 2 includes the following steps.

Step ①: The computing resource 1 switches from the REE mode to the TEE mode.

Specifically, the computing resource 1 switches from the EL1 in the REE mode to the S-EL2 in the TEE mode, that is, the computing resource 1 enters a secure world from a non-secure world. In this way, the computing resource 1 can be run in the TEE.

Step ②: The computing resource 1 triggers a process interrupt for the computing resource 2.

Specifically, before the computing resource 1 enters the TEE mode, the second core may trigger an interrupt (inter-processor interrupt, IPI) of a scheduler in the second core based on a topology structure of a multiprocessor identity register (multiprocessor identity register, MPIDR), to trigger the computing resource 2 to schedule, away from the computing resource 2, the second thread that is being executed on the computing resource 2, and power off the computing resource 2. When the computing resource 1 enters the TEE OS at the S-EL2, a status of the computing resource 2 is checked. If the computing resource 2 is still not powered off, a fast interrupt request (fast interrupt request, FIQ) is configured for the computing resource 2, to interrupt the computing resource 2 from the EL1 in the REE mode.

The MPIDR usually includes information like a processor number, a cluster number, and a layer number, and the information may help an operating system and software effectively manage and schedule a task of a multi-core processor.

Step ③: The computing resource 2 switches from the REE mode to the TEE mode.

Specifically, the computing resource 2 switches from the EL1 in the REE mode to the S-EL2 in the TEE mode, that is, the computing resource 2 enters the secure world from the non-secure world. In this way, the computing resource 2 can be run in the TEE.

Step ④: The computing resource 1 and the computing resource 2 are run in the TEE OS.

Specifically, after entering the S-EL2 in the TEE mode from the EL1 in the REE mode, the computing resource 1 enters the TEE OS from the S-EL2 in the TEE mode, and the computing resource 1 is run in the TEE OS. In this case, the second core executes the first thread by using the computing resource 1, and the security level of the first thread is the TEE mode. Similarly, the computing resource 2 is either powered off or forcibly waiting in a TEE state after entering the S-EL2 in the TEE mode from the EL1 in the REE mode. If a power-on procedure of the computing resource 2 is triggered in this case, when the procedure proceeds to the S-EL2, the computing resource 2 is also triggered to forcibly wait in the TEE state. In this case, the second core executes the second thread by using the computing resource 2, and the security level of the second thread is the TEE mode.

Step ⑤: The computing resource 1 and the computing resource 2 switch from the TEE mode to the REE mode.

Specifically, after the second core executes the first thread by using the computing resource 1 and executes the second thread by using the computing resource 2, the computing resource 1 and the computing resource 2 synchronously exit from the TEE mode to the EL1 in the REE mode.

In the foregoing process, the second core may simultaneously run the computing resource 1 and the computing resource 2 in the TEE mode (as shown in FIG. 11), so that the first thread executed by using the computing resource 1 and the second thread executed by using the computing resource 2 have a same security level (that is, the TEE mode). This can eliminate a security risk in a case in which the security level of the first thread and the security level of the second thread are different when the second core executes the first thread and the second thread in parallel.

According to the methods provided in embodiments of this application, this application further provides a computer-readable storage medium. The computer-readable medium stores program code. When the program code is run on a computer, the computer is enabled to perform the method in any one of the foregoing method embodiments.

An embodiment of this application further provides an electronic device. The electronic device is configured to perform the method in any one of the foregoing method embodiments.

The terms "component", "module", and "system" and the like used in this specification indicate a computer-related entity, hardware, firmware, a combination of hardware and software, software, or software being executed. For example, a component may be, but is not limited to, a process that is run on a processor, a processor, an object, an executable file, an execution thread, a program, and/or a computer. As illustrated by using figures, both a computing device and an application that is run on the computing device may be components. One or more components may reside in a process and/or an execution thread, and a component may be located on one computer and/or distributed between two or more computers. In addition, these components may be executed from various computer-readable media that store various data structures. For example, the component may perform communication through a local process and/or a remote process based on a signal with one or more data packets (for example, data from two components that interact with another component in a local system, a distributed system, and/or a network, for example, an internet that interacts with another system through a signal).

A person of ordinary skill in the art may be aware that various illustrative logical blocks (illustrative logical block) and steps (step) described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application. However, it should not be considered that the implementation goes beyond the scope of this application.

It can be clearly understood by a person skilled in the art that, for ease and brevity of description, for detailed working processes of the foregoing systems, apparatuses, and units, reference may be made to corresponding processes in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division. During actual implementation, another division manner may be used. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separated, and components shown as units may or may not be physical units, to be specific, may be located in one place, or may be distributed on a plurality of network units. Some or all of the units may be selected according to actual requirements to achieve the objectives of the solutions of embodiments.

In addition, functional units in embodiments of this application may be integrated into one processing unit, or each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The storage medium includes any medium that can store program code, for example, a USB flash drive, a removable hard disk drive, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A heterogeneous multi-core apparatus, comprising a plurality of cores, wherein the plurality of cores comprise at least one high-performance core and at least one energy-efficient core, maximum power consumption of any one of the at least one high-performance core is greater than maximum power consumption of any one of the at least one energy-efficient core, and a maximum computing capacity of any one of the at least one high-performance core is greater than a maximum computing capacity of any one of the at least one energy-efficient core, wherein
a first core of the plurality of cores is configured to allocate a first computing resource to a first thread, and allocate a second computing resource to a second thread, wherein the first computing resource and the second computing resource belong to a second core of the plurality of cores, and the second core is the first core or another core different from the first core; and
the second core is configured to execute the first thread and the second thread in parallel, wherein the first computing resource is used to execute the first thread, and the second computing resource is used to execute the second thread.

2. The apparatus according to claim 1, wherein the plurality of cores further comprise at least one medium-performance core, maximum power consumption of any one of the at least one high-performance core is greater than maximum power consumption of any one of the at least one medium-performance core, a maximum computing capacity of any one of the at least one high-performance core is greater than a maximum computing capacity of any one of the at least one medium-performance core, maximum power consumption of any one of the at least one medium-performance core is greater than maximum power consumption of any one of the at least one energy-efficient core, and a maximum computing capacity of any one of the at least one medium-performance core is greater than a maximum computing capacity of any one of the at least one energy-efficient core.

3. The apparatus according to claim 1 or 2, wherein the first core is specifically configured to:
allocate the first computing resource in the second core to the first thread according to a performance requirement of the first thread; and
allocate the second computing resource in the second core to the second thread according to a performance requirement of the second thread.

4. The apparatus according to any one of claims 1 to 3, wherein the first computing resource comprises a first dedicated computing resource, the second computing resource comprises a second dedicated computing resource different from the first dedicated computing resource, and a percentage of the first dedicated computing resource in a hardware resource of the second core is different from a percentage of the second dedicated computing resource in the hardware resource of the second core.

5. The apparatus according to any one of claims 1 to 4, wherein the first computing resource and the second computing resource comprise a shared computing resource, and the second core is further configured to execute the first thread and the second thread in parallel through time division multiplexing of the shared computing resource, wherein a priority of the first thread is higher than a priority of the second thread, and in the time division multiplexing, time at which the first thread uses the shared computing resource is prior to time at which the second thread uses the shared computing resource.

6. The apparatus according to claim 5, wherein the shared computing resource comprises at least one of the following:
an instruction translation lookaside buffer ITLB, an instruction cache ICache, a branch target buffer BTB, a register rename table RRT, a physical register file RPF, a data translation lookaside buffer DTLB, or a cache DCache.

7. The apparatus according to any one of claims 1 to 6, wherein the second core is further configured to:
when the first thread causes blocking at a pipeline frontend of the second core and a third thread causes blocking at a pipeline backend of a third core of the plurality of cores, schedule the third thread to the second core for execution, or schedule the first thread to the third core for execution, wherein the third core is different from the second core.

8. The apparatus according to any one of claims 1 to 7, wherein the first thread and the second thread have a same security level.

9. The apparatus according to claim 8, wherein the security level is a trusted execution environment TEE mode.

10. A scheduling method, wherein the method comprises:
allocating a first computing resource to a first thread, and allocating a second computing resource to a second thread, wherein the first computing resource and the second computing resource belong to a first core or a second core of a plurality of cores comprised in a heterogeneous multi-core apparatus, the plurality of cores comprise at least one high-performance core and at least one energy-efficient core, maximum power consumption of any one of the at least one high-performance core is greater than maximum power consumption of any one of the at least one energy-efficient core, and a maximum computing capacity of any one of the at least one high-performance core is greater than a maximum computing capacity of any one of the at least one energy-efficient core; and
executing the first thread and the second thread in parallel, wherein the first computing resource is used to execute the first thread, and the second computing resource is used to execute the second thread.

11. The method according to claim 10, wherein the plurality of cores further comprise at least one medium-performance core, maximum power consumption of any one of the at least one high-performance core is greater than maximum power consumption of any one of the at least one medium-performance core, a maximum computing capacity of any one of the at least one high-performance core is greater than a maximum computing capacity of any one of the at least one medium-performance core, maximum power consumption of any one of the at least one medium-performance core is greater than maximum power consumption of any one of the at least one energy-efficient core, and a maximum computing capacity of any one of the at least one medium-performance core is greater than a maximum computing capacity of any one of the at least one energy-efficient core.

12. The method according to claim 10 or 11, wherein
allocating the first computing resource to the first thread comprises: allocating the first computing resource in the second core to the first thread according to a performance requirement of the first thread; and
allocating the second computing resource to the second thread comprises: allocating the second computing resource in the second core to the second thread according to a performance requirement of the second thread.

13. The method according to any one of claims 10 to 12, wherein the first computing resource comprises a first dedicated computing resource, the second computing resource comprises a second dedicated computing resource different from the first dedicated computing resource, and a percentage of the first dedicated computing resource in a hardware resource of the first core or the second core is different from a percentage of the second dedicated computing resource in the hardware resource of the first core or the second core.

14. The method according to any one of claims 10 to 13, wherein the first computing resource and the second computing resource comprise a shared computing resource, and the method further comprises:
executing the first thread and the second thread in parallel through time division multiplexing of the shared computing resource, wherein a priority of the first thread is higher than a priority of the second thread, and in the time division multiplexing, time at which the first thread uses the shared computing resource is prior to time at which the second thread uses the shared computing resource.

15. The method according to claim 14, wherein the shared computing resource comprises at least one of the following:
an instruction translation lookaside buffer ITLB, an instruction cache ICache, a branch target buffer BTB, a register rename table RRT, a physical register file RPF, a data translation lookaside buffer DTLB, or a cache DCache.

16. The method according to any one of claims 10 to 15, wherein the method further comprises:
when the first thread causes blocking at a pipeline frontend of the second core and a third thread causes blocking at a pipeline backend of a third core of the plurality of cores, schedule the third thread to the second core for execution, or schedule the first thread to the third core for execution, wherein the third core is different from the second core.

17. The method according to any one of claims 10 to 16, wherein the first thread and the second thread have a same security level.

18. The method according to claim 17, wherein the security level is a trusted execution environment TEE mode.

19. A scheduling apparatus, comprising:
a scheduling unit, configured to allocate a first computing resource to a first thread, and allocate a second computing resource to a second thread, wherein the first computing resource and the second computing resource belong to a first core or a second core of a plurality of cores comprised in a heterogeneous multi-core apparatus, the plurality of cores comprise at least one high-performance core and at least one energy-efficient core, maximum power consumption of any one of the at least one high-performance core is greater than maximum power consumption of any one of the at least one energy-efficient core, and a maximum computing capacity of any one of the at least one high-performance core is greater than a maximum computing capacity of any one of the at least one energy-efficient core; and
an execution unit, configured to execute the first thread and the second thread in parallel, wherein the first computing resource is used to execute the first thread, and the second computing resource is used to execute the second thread.

20. The apparatus according to claim 19, wherein the plurality of cores further comprise at least one medium-performance core, maximum power consumption of any one of the at least one high-performance core is greater than maximum power consumption of any one of the at least one medium-performance core, a maximum computing capacity of any one of the at least one high-performance core is greater than a maximum computing capacity of any one of the at least one medium-performance core, maximum power consumption of any one of the at least one medium-performance core is greater than maximum power consumption of any one of the at least one energy-efficient core, and a maximum computing capacity of any one of the at least one medium-performance core is greater than a maximum computing capacity of any one of the at least one energy-efficient core.

21. The apparatus according to claim 19 or 20, wherein the scheduling unit is specifically configured to:
allocate the first computing resource in the second core to the first thread according to a performance requirement of the first thread; and
allocate the second computing resource in the second core to the second thread according to a performance requirement of the second thread.

22. The apparatus according to any one of claims 19 to 21, wherein the first computing resource comprises a first dedicated computing resource, the second computing resource comprises a second dedicated computing resource different from the first dedicated computing resource, and a percentage of the first dedicated computing resource in a hardware resource of the first core or the second core is different from a percentage of the second dedicated computing resource in the hardware resource of the first core or the second core.

23. The apparatus according to any one of claims 19 to 22, wherein the first computing resource and the second computing resource comprise a shared computing resource, and the execution unit is further configured to:
execute the first thread and the second thread in parallel through time division multiplexing of the shared computing resource, wherein a priority of the first thread is higher than a priority of the second thread, and in the time division multiplexing, time at which the first thread uses the shared computing resource is prior to time at which the second thread uses the shared computing resource.

24. The apparatus according to claim 23, wherein the shared computing resource comprises at least one of the following:
an instruction translation lookaside buffer ITLB, an instruction cache ICache, a branch target buffer BTB, a register rename table RRT, a physical register file RPF, a data translation lookaside buffer DTLB, or a cache DCache.

25. The apparatus according to any one of claims 19 to 24, wherein the scheduling unit is further configured to:
when the first thread causes blocking at a pipeline frontend of the second core and a third thread causes blocking at a pipeline backend of a third core of the plurality of cores, schedule the third thread to the second core for execution, or schedule the first thread to the third core for execution, wherein the third core is different from the second core.

26. The apparatus according to any one of claims 19 to 25, wherein the first thread and the second thread have a same security level.

27. The apparatus according to claim 26, wherein the security level is a trusted execution environment TEE mode.

28. A computing device, wherein the computing device comprises the heterogeneous multi-core apparatus according to any one of claims 1 to 9, or the scheduling apparatus according to any one of claims 19 to 27.

29. A computer-readable storage medium, wherein the computer-readable storage medium comprises instructions, and when the instructions are run on a computer, the computer is enabled to perform the operation steps of the method according to any one of claims 10 to 18.
